# EUROPEAN PATENT APPLICATION

(11) **EP 4 657 272 A1**
(43) Date of publication of application: **03.12.2025**
(21) Application number: 24835064.7
(22) Date of filing: 29.02.2024
(51) Int. Cl.: G06F 16/176

(54) **FILE SHARING METHOD, AND ELECTRONIC DEVICE AND STORAGE MEDIUM**

(30) Priority: 04.07.2023 CN 202310815941
(71) Applicant: Honor Device Co., Ltd., Shenzhen, Guangdong 518040 (CN)
(72) Inventor: SONG, Wenxuan, Shenzhen, Guangdong 518040 (CN); WANG, Long, Shenzhen, Guangdong 518040 (CN); SHI, Jiaojiao, Shenzhen, Guangdong 518040 (CN); WANG, Xue, Shenzhen, Guangdong 518040 (CN)
(74) Representative: MERH-IP Matias Erny Reichl Hoffmann Patentanwälte PartG mbB
(86) International application number: PCT/CN2024/079356
(87) International publication number: WO 2025/007577

(57) **Abstract**

This application provides a file sharing method, an electronic device, and a storage medium. The method includes: displaying a first interface when an electronic device runs a first application; displaying a first sharing interface in response to a sharing instruction for a first material, where the first sharing interface includes a sharing title area and a path selection area, and the sharing title area of the first sharing interface includes a format conversion control and a format sub-area; displaying a second sharing interface in response to an interaction instruction for the format conversion control on the first sharing interface, where a second format is displayed on the second sharing interface; converting a format of the first material from a first format into the second format in response to a format selection instruction for the second format, and displaying a third sharing interface, where the third sharing interface includes a sharing title area and a path selection area; and sharing, in response to a sharing manner in the path selection area of the third sharing interface, the first material in the second format in the sharing manner. In this way, file sharing efficiency can be improved.

## Description

This application claims priority to Chinese Patent Application No. 202310815941.X, filed with the China National Intellectual Property Administration on July 04, 2023 and entitled "FILE SHARING METHOD AND APPARATUS, ELECTRONIC DEVICE, AND STORAGE MEDIUM", which is incorporated herein by reference in its entirety.

### TECHNICAL FIELD

This application relates to the field of mobile terminal technologies, and specifically, to a file sharing method, an electronic device, and a storage medium.

### BACKGROUND

Some user terminals provide a file sharing function, to allow a user to share a file from one user terminal to another user terminal, for example, share a document from a mobile phone to a computer.

However, in some application scenarios, the user may hope to perform format conversion on a to-be-shared file before sharing the file, and then shares the file that has undergone the format conversion. For example, if the user needs to share a picture in a JPG format from a mobile phone to a computer, but the user considers that it is inconvenient to view the picture in the JPG format on the computer, the user needs to open an application with a format conversion function, select the picture in the JPG format in the application to convert the picture in the JPG format into a file in a PDF format, and use an application with a sharing function, for example, a file manager application, to select the file in the PDF format and share the file in the PDF format to the computer via the sharing function. The operations are complex.

### SUMMARY

In view of this, this application provides a file sharing method, an electronic device, and a storage medium, to improve file sharing efficiency.

According to a first aspect of this application, a file sharing method is provided. The method includes:
displaying a first interface when an electronic device runs a first application, where a first material in a first format is displayed on the first interface;
displaying a first sharing interface in response to a sharing instruction for the first material, where the first sharing interface includes a sharing title area and a path selection area, the sharing title area of the first sharing interface includes a format conversion control and a format sub-area, the first format is displayed in the format sub-area of the first sharing interface, and a sharing manner of the first material in the first format is displayed in the path selection area of the first sharing interface;
displaying a second sharing interface in response to an interaction instruction for the format conversion control on the first sharing interface, where a second format is displayed on the second sharing interface, and the second format is different from the first format;
converting a format of the first material from the first format into the second format in response to a format selection instruction for the second format, and displaying a third sharing interface, where the third sharing interface includes a sharing title area and a path selection area, the sharing title area of the third sharing interface includes a format conversion control and a format sub-area, the second format is displayed in the format sub-area of the third sharing interface, and a sharing manner of the first material in the second format is displayed in the path selection area of the third sharing interface; and
sharing, in response to a sharing manner in the path selection area of the third sharing interface, the first material in the second format in the sharing manner.

In a possible embodiment, the method further includes:
displaying a converting interface when performing the step of converting the format of the first material from the first format into the second format, where the converting interface includes a conversion cancel control; and
terminating, in response to an interaction instruction for the conversion cancel control, performing the step of converting the format of the first material from the first format into the second format, and displaying the first sharing interface.

In a possible embodiment, the sharing title area of the first sharing interface and/or the sharing title area of the third sharing interface further include/includes a title sub-area, and a material name of the first material or a quantity of the first materials is displayed in the title sub-area.

In a possible embodiment, when there is one first material, the material name of the first material is displayed in the title sub-area.

When there is one first material, the quantity of first materials is displayed in the title sub-area.

In a possible embodiment, when there is one first material, the first format is displayed in the format sub-area of the first sharing interface.

When there are a plurality of first materials, text information representing a default format is displayed in the format sub-area of the first sharing interface.

In a possible embodiment, the sharing title area of the first sharing interface and/or the sharing title area of the third sharing interface further include/includes an attribute sub-area, where a target attribute of the first material is displayed in the attribute sub-area, and the target attribute is an attribute that is in a preset application-attribute correspondence and that corresponds to the first application.

In a possible embodiment, the service-attribute correspondence includes one or more of the following correspondences:

A file manager corresponds to a file size, and a browser corresponds to a website.

In a possible embodiment, the sharing title area of the first sharing interface and/or the third sharing interface further include/includes a thumbnail sub-area.

When there is one first material, a thumbnail of the first material is displayed in the thumbnail sub-area.

When there are a plurality of first materials, a stacked thumbnail is displayed in the thumbnail sub-area, where the stacked thumbnail is obtained by stacking thumbnails of the first materials.

In a possible embodiment, the stacked thumbnail is obtained through stacking in the following manner, including:
when there are not more than N first materials, stacking thumbnails of all the first materials, to obtain the stacked thumbnail; or
when there are more than N first materials, stacking thumbnails of first N first materials in a sequence in which the first materials are selected based on the sharing instruction, to obtain the stacked thumbnail.

In a possible embodiment, the first sharing interface and the third sharing interface each further include an atomic service area, the atomic service area includes an atomic service control, and each atomic service control corresponds to one atomic service; and
the method further includes:
performing, in response to an interaction instruction for the atomic service control, an atomic service corresponding to the atomic service control on the first material.

In a possible embodiment, the atomic service area includes an atomic service control corresponding to the format of the first material and the first application.

In a possible embodiment, if the first material selected based on the sharing instruction is text, a single picture, or a single document, and the first application is global favorites, the atomic service area includes atomic service controls corresponding to the following atomic services: a print service, a save to text notes service, a save to Evernote service, a save to file manager service, and an add to global favorites service.

If the first material selected based on the sharing instruction is a plurality of pictures or a plurality of documents, and the first application is global favorites, the atomic service area includes atomic service controls corresponding to the following atomic services: a save to text notes service, a save to Evemote service, a save to file manager service, and an add to global favorites service.

If the first material selected based on the sharing instruction is a video, and the first application is global favorites, the atomic service area includes atomic service controls corresponding to the following atomic services: atomic service controls corresponding to a save to Evemote service, a save to file manager service, and an add to global favorites service.

If the first material selected based on the sharing instruction is an application, and the first application is global favorites, the atomic service area includes atomic service controls corresponding to the following atomic services: a save to file manager service, and an add to global favorites service.

If the first material selected based on the sharing instruction is a link, and the first application is global favorites, the atomic service area includes atomic service controls corresponding to the following atomic services: a save to text notes service, a save to Evernote service, and an add to global favorites service.

If the first material selected based on the sharing instruction is a compressed package, and the first application is global favorites, the atomic service area includes an atomic service control corresponding to the following atomic service: an add to global favorites service.

In a possible embodiment, when there are a plurality of first materials, an intersection of second formats preset for each first format is displayed on the second sharing interface.

In a possible embodiment, if the first material selected based on the sharing instruction is text, and the first application is global favorites, the second includes a word format, a pdf format, and a txt format.

If the first material is a single picture, and the first application is global favorites, the second format includes a pdf format and a JPG format.

If the first material is a plurality of pictures, and the first application is global favorites, the second format includes a pdf format, a JPG format, and a long-image format.

If the first material selected based on the sharing instruction is a single word document, and the first application is global favorites, the second format includes a pdf format and a long-image format.

If the first material is single ppt, and the first application is global favorites, the second format includes a pdf format and a long-image format.

If the first material is text or a single note, and the first application is a notes service, the second format includes a picture format, a text format, a DOC format, a PDF format, and an HTML format.

If the first material is a schedule, and the first application is a schedule application, the second format includes a picture format, a text format, and a calendar format.

If the first material is a contact, and the first application is Phone, the second format includes a two-dimensional code format, a VCard format, and a text format.

In a possible embodiment, the first sharing interface, the second sharing interface, and the third sharing interface are displayed over the first interface in a floating manner.

In a possible embodiment, the method further includes:
displaying a second interface when the electronic device runs a second application, where a second material in a third format is displayed on the second interface, and the second application includes a gallery and is different from the first application;
displaying a fourth sharing interface in response to a sharing instruction for the second material, where the fourth sharing interface includes a path selection area and an atomic service area;
performing, in response to an interaction instruction for an atomic service control on the fourth sharing interface, an atomic service corresponding to the atomic service control on the second material; and
sharing, in response to a sharing manner displayed in the path selection area of the fourth sharing interface, the second material in the sharing manner.

According to a second aspect of this application, an electronic device is provided, including:
one or more processors and a memory.

The memory is coupled to the one or more processors. The memory is configured to store computer program code. The computer program code includes computer instructions. The one or more processors invoke the computer instructions to enable the electronic device to perform the method and steps according to the foregoing first aspect.

According to a third aspect of this application, a computer-readable storage medium is provided. The computer-readable storage medium includes computer instructions. When the computer instructions are run on an electronic device, the electronic device is enabled to perform the method and steps according to the foregoing first aspect.

In the technical solutions provided in embodiments of this application, a user can select the second format through interaction with the format conversion control, to control the electronic device to convert the format of the first material from the original first format into the second format, and display the third sharing interface for the first material that has undergone the format conversion, to enable the user to share, via the displayed third sharing interface, the first material that has undergone the format conversion. This is equivalent to performing format conversion on the first material before sharing. In addition, the user can directly perform format conversion on a material on a sharing interface, after the format conversion, the sharing interface is automatically displayed for the material that has undergone the format conversion, without a need to manually open an application with a format conversion function or to manually search for a material that has undergone format conversion in an application with a sharing function. Therefore, operations are simple, and material sharing efficiency can be improved.

### BRIEF DESCRIPTION OF DRAWINGS

The accompanying drawings described herein are used to provide a further understanding of this application, and form a part of this application. Exemplary embodiments of this application and descriptions thereof are used to explain this application, and do not constitute any inappropriate limitation to this application.
FIG. 1 is a schematic diagram of a structure of an electronic device;
FIG. 2 is a schematic diagram of a structure of a system architecture of an electronic device;
FIG. 3A is a schematic diagram of a video watching interface;
FIG. 3B is a schematic diagram of a global favorites interface displayed in a form of a floating window;
FIG. 3C is a schematic diagram of a global favorites interface displayed in full screen;
FIG. 4 is a schematic diagram of inputting a sharing instruction manner;
FIG. 5 is a schematic diagram of a sharing interface in a related technology;
FIG. 6 is a schematic flowchart of a file sharing method according to this application;
FIG. 7A is a schematic diagram of a sharing interface when sharing is triggered on an electronic device that is running a first application;
FIG. 7B is a schematic diagram of an interface after a user taps a format conversion control when a first material is a picture;
FIG. 7C is a schematic diagram of an interface after a user taps a format conversion control when a first material is a contact;
FIG. 7D is a schematic diagram of an interface after a user taps a format conversion control when a first material is a PDF file;
FIG. 7E is a schematic diagram of an interface after a user taps a format conversion control when a first material is an application;
FIG. 7F is a schematic diagram of a sharing interface displayed when a first material does not support format conversion;
FIG. 7G is a schematic diagram of an interface displayed when format conversion is being performed on a first material;
FIG. 7H is a schematic diagram of a sharing interface displayed after a first material is converted into PDF;
FIG. 7I is a schematic diagram of a sharing interface after a user scrolls on a sharing interface;
FIG. 7J is a schematic diagram of a sharing interface when sharing is triggered on an electronic device that is running a second application;
FIG. 8 is a schematic diagram of a sharing interface when a first material is a plurality of files;
FIG. 9A is a schematic diagram of thumbnails of first materials in different file formats;
FIG. 9B is a schematic diagram of icons of different quantities of first materials displayed in a thumbnail sub-area;
FIG. 10 is a schematic diagram of a sharing interface after a user taps an application icon;
FIG. 11 is a schematic diagram of a sharing interface on which a display all control is displayed;
FIG. 12A is a schematic diagram of an application selection interface displayed after a user taps a display all control;
FIG. 12B is another schematic diagram of an application selection interface displayed after a user taps a display all control;
FIG. 12C is a schematic diagram of an icon editing interface displayed after a user taps an edit control;
FIG. 12D is a schematic diagram of an application selection interface displayed after a user completes icon editing; and
FIG. 13 is a schematic diagram of a size of a sharing interface.

### DESCRIPTION OF EMBODIMENTS

To make the objectives, technical solutions, and advantages of the present invention clearer and more comprehensible, the following further describes the present invention in detail with reference to the accompanying drawings and embodiments. Apparently, the described embodiments are merely some embodiments rather than all of embodiments of the present invention. All other embodiments obtained by a person of ordinary skill in the art based on the embodiments of the present invention shall fall within the protection scope of the present invention.

The terms used in embodiments of this application are for the purpose of describing specific embodiments, and are not intended to limit this application. The singular forms of "a", "the", and "said" used in embodiments of this application and the appended claims are intended to include the plural forms as well, unless the context clearly indicates otherwise.

It should be understood that, the term "and/or" used in this specification describes only an association relationship for describing associated objects and represents that three relationships may exist. For example, "A and/or B" may represent the following three cases: Only A exists, both A and B exist, and only B exists. In addition, the character "/" in this specification generally indicates an "or" relationship between the associated objects.

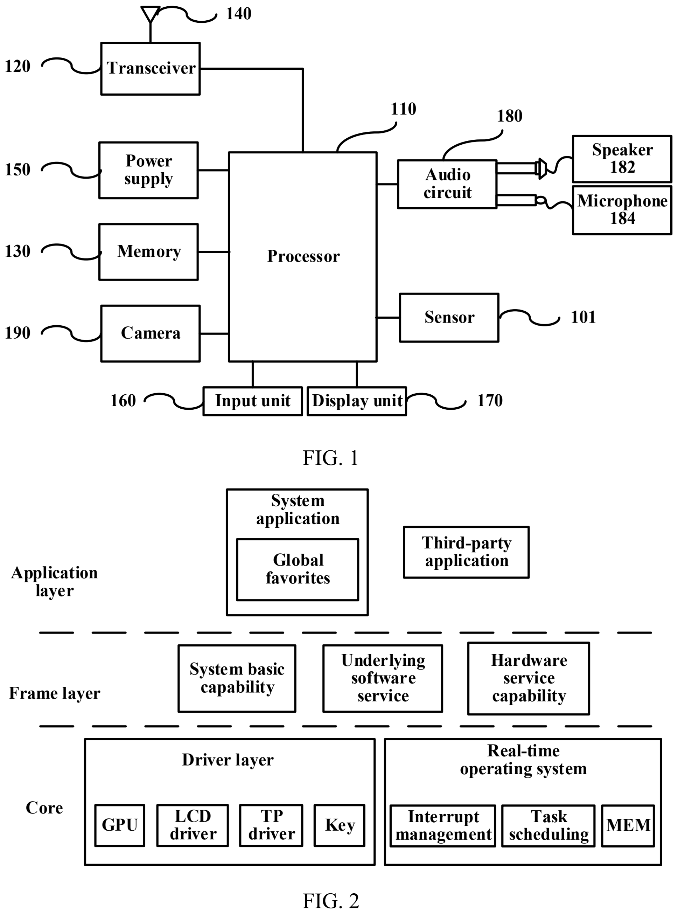

FIG. 1 is a schematic diagram of a hardware structure of an electronic device according to an embodiment of this application. The electronic device may be a mobile phone, a tablet computer, or another user terminal.

The electronic device includes a processor 110, a transceiver 120, and a display unit 170. The display unit 170 includes a display screen.

Optionally, the electronic device may further include a memory 130. The processor 110, the transceiver 120, and the memory 130 communicate with each other and transmit a control and/or data signal through an internal connection path. The memory 130 is configured to store a computer program. The processor 110 is configured to invoke the computer program from the memory 130 and run the computer program in the memory 130.

Optionally, the electronic device may further include an antenna 140, configured to send a radio signal output by the transceiver 120.

The processor 110 and the memory 130 may be combined into a processing apparatus, or more commonly, the processor 110 and the memory 130 are independent components. The processor 110 is configured to execute program code stored in the memory 130 to implement the foregoing functions. During specific implementation, the memory 130 may alternatively be integrated into the processor 110, or independent of the processor 110.

In addition, to improve functions of the electronic device, the electronic device may further include one or more of an input unit 160, an audio circuit 180, a camera 190, a sensor 101, and the like. The audio circuit may further include a speaker 182, a microphone 184, and the like.

Optionally, the electronic device may further include a power supply 150 configured to supply power to various devices or circuits in the electronic device.

It may be understood that operations and/or functions of the modules in the electronic device shown in FIG. 1 are respectively for implementing the corresponding procedures in the following method embodiments. For details, refer to descriptions in the following method embodiments. To avoid repetition, detailed descriptions are properly omitted herein.

It may be understood that the processor 110 in the electronic device shown in FIG. 1 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated to one or more processors. A memory may be further disposed in the processor 110, to store instructions and data. In some embodiments, the memory in the processor 110 is a cache. The memory may store instructions or data that is recently used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulsecode modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that, a schematic interface connection relationship between the modules in embodiments of this application is merely an example for descriptions, and constitutes no limitation on the structure of the electronic device. In some other embodiments of this application, the electronic device may alternatively use an interface connection manner different from that in the foregoing embodiments, or use a combination of a plurality of interface connection manners.

It may be understood that the power supply 150 shown in FIG. 1 is configured to supply power to the processor 110, the memory 130, the display unit 170, the camera 190, the input unit 160, the transceiver 120, and the like. The antenna 140 is configured to transmit and receive an electromagnetic wave signal. Each antenna in the electronic device may be configured to cover one or more communication frequency bands. Different antennas may further be multiplexed to improve antenna utilization. For example, the antenna 140 may be multiplexed as a diversity antenna of a wireless local area network. In some other embodiments, the antenna may be used in combination with a tuning switch.

The transceiver 120 may provide a solution for wireless communication applied to the electronic device, for example, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and infrared (infrared, IR). The transceiver 120 may be one or more devices that integrate at least one communication processing module. The transceiver 120 receives an electromagnetic wave through the antenna 140, performs frequency modulation and filtering on an electromagnetic wave signal, and sends a processed signal to the processor 110. The transceiver 120 may further receive a to-be-sent signal from the processor 110, and perform frequency modulation and amplification on the signal. The amplified signal is converted into an electromagnetic wave and radiated out through the antenna 140.

In some embodiments, in the electronic device, the antenna 140 is coupled to the transceiver 120, so that the electronic device may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS) and/or a satellite based augmentation system (satellite based augmentation systems, SBAS).

The electronic device implements a display function through the GPU, the display unit 170, and the application processor. The GPU is a microprocessor for image processing and is connected to the display unit 170 and the application processor. The GPU is configured to: perform mathematical and geometric calculations for graphics rendering. The processor 110 may include one or more GPUs that execute program instructions to generate or change display information.

The display unit 170 is configured to display an image, a video, and the like. The display unit 170 includes a display panel. The display panel may be a liquid crystal display (liquid crystal display, LCD), an organic light-emitting diode (organic lightemitting diode, OLED), an active-matrix organic light emitting diode (activematrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), and the like. In some embodiments, the electronic device may include 1 or N display units 170. N is a positive integer greater than 1.

The electronic device may implement a photographing function through the ISP, the camera 190, the video codec, the GPU, the display unit 170, the application processor, and the like.

The ISP is configured to process data fed back by the camera 190. For example, during video recording, the camera is opened, light is transmitted to a photosensitive element of the camera through a lens, and an optical signal is converted into an electrical signal. The photosensitive element of the camera transmits the electrical signal to the ISP for processing, so that the electrical signal is converted into an image visible to naked eyes. The ISP may further perform algorithm optimization on noise, luminance, and complexion of the image.

The ISP may further optimize parameters such as exposure and color temperature of a photographed scene. In some embodiments, the ISP may be disposed in the camera 190. The camera 190 is configured to capture a still image or a video. An optical image of an object is generated through a lens and is projected onto a photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device may include 1 or N cameras 190, where N is a positive integer greater than 1. The digital signal processor is configured to process a digital signal. In addition to processing the digital image signal, the digital signal processor may further process another digital signal. For example, when the electronic device performs frequency selection, the digital signal processor is configured to perform Fourier transform or the like on frequency energy.

The video codec is configured to compress or decompress a digital video. The electronic device may support one or more video codecs. In this way, the electronic device can play or record videos in a plurality of encoding formats, such as: a moving picture experts group (moving picture experts group, MPEG) 1, MPEG 2, MPEG 3, and MPEG 4.

The NPU is a neural-network (neural-network, NN) computing processor, quickly processes input information by using a structure of a biological neural network, for example, a transmission mode between neurons in a human brain, and may further constantly perform self-learning. The NPU may be used to implement an application such as intelligent cognition of the electronic device, for example, image recognition, facial recognition, voice recognition, and text understanding.

The memory 130 may be configured to store computer executable program code, where the executable program code includes instructions. The memory 130 may include a program storage area and a data storage area. The program storage area may store an operating system, an application required by at least one function (such as a voice playback function and an image playback function), and the like. The data storage area may store data (for example, audio data and an address book) and the like created when the electronic device is used. In addition, the memory 130 may include a highspeed random access memory, and may further include a non-volatile memory, for example, at least one magnetic disk storage device, a flash memory, or a universal flash storage (universal flash storage, UFS). The processor 110 runs the instructions stored in the memory 130 and/or the instructions stored in the memory disposed in the processor, to implement various functional applications and data processing of the electronic device.

The electronic device may implement an audio function, such as music playback and recording, by using the audio module 180, the speaker 182, the microphone 184, the application processor, and the like.

The audio circuit 180 is configured to convert digital audio information into an analog audio signal output, and is also configured to convert an analog audio input into a digital audio signal. The audio circuit 180 may further be configured to encode and decode the audio signal. In some embodiments, the audio circuit 180 may be disposed in the processor 110, or some functional modules in the audio module 180 are disposed in the processor 110.

The speaker 182, also referred to as a "loudspeaker", is configured to convert an audio electrical signal into a sound signal. The electronic device can allow listening to music or answering a hands-free call through the speaker 182.

The microphone 184, also referred to as a "mic" or a "mike", is configured to convert a sound signal into an electrical signal. When making a call or sending a voice message, a user may make a sound approaching the microphone 184, to input a sound signal to the microphone 184. At least one microphone 184 may be disposed in the electronic device. In some other embodiments, the electronic device may be provided with two microphones 184, to implement a noise reduction function in addition to collecting sound signals. In some other embodiments, the electronic device may alternatively be provided with three, four, or more microphones 184 to collect sound signals, perform noise reduction, and identify sound sources to implement a directional recording function, and the like.

The file sharing method in embodiments of this application may be implemented by using a system architecture shown in FIG. 2. Refer to FIG. 2. The system architecture of an electronic device includes a kernel part, a framework layer part, and an application layer part. The kernel part includes a drive layer and a real-time operating system. The drive layer includes a graphic processing unit (GPU), a display driver (which is specifically an LCD driver in the figure), a TP driver (a touchscreen driver), a key, and the like. The real-time operating system includes interrupt management, task scheduling, and memory management (MEM). For example, the frame layer includes a system basic capability, an underlying software service, a hardware service capability, and the like. The application layer includes a system application (such as email, contacts, or browser), and a third-party application (such as a social application or a video application provided by a third party).

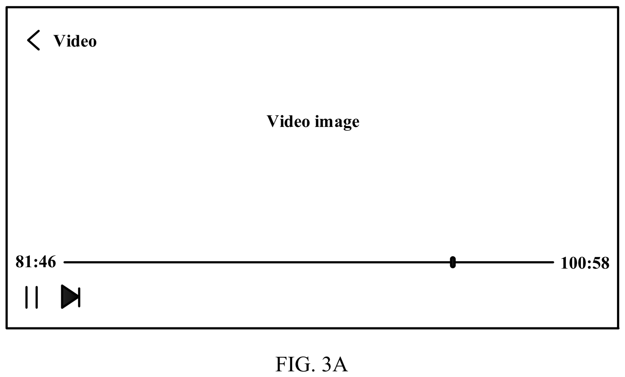

The system application and the third-party application include an application with a material sharing capability. For example, the system application includes global favorites, and a user may add various materials to the global favorites based on an actual requirement in a process of using the electronic device. The material herein may be in a format such as text, a picture, audio, a video, an application, a website, or a contact. For example, refer to FIG. 3A. A user is watching a video by using a video application, and the user needs to save a currently played video frame as a material. The user may activate global favorites by performing a preset gesture operation, for example, touching a touchscreen with three fingers and swiping downward, so that the currently played video frame is added to the global favorites as a material. For ease of description, the video frame added to the global favorites is referred to as "photographic work.jpg" below.

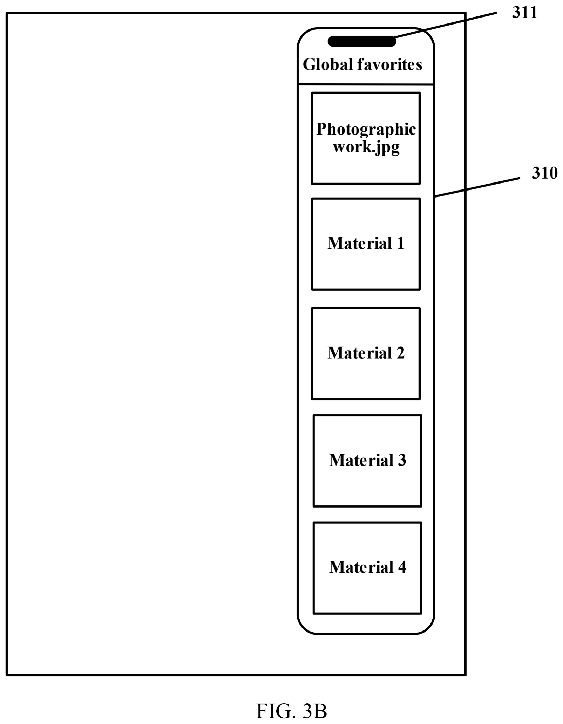

The user may tap a global favorites icon displayed on a desktop or an application interface in a floating manner, to control the electronic device to display a floating window 310 of global favorites shown in FIG. 3B. Materials added to the global favorites are displayed in the floating window 310, for example, the foregoing "photographic work.jpg". The user may interact with the materials displayed in the floating window 310, to control the electronic device to perform operations such as sharing the materials and removing the materials from the global favorites.

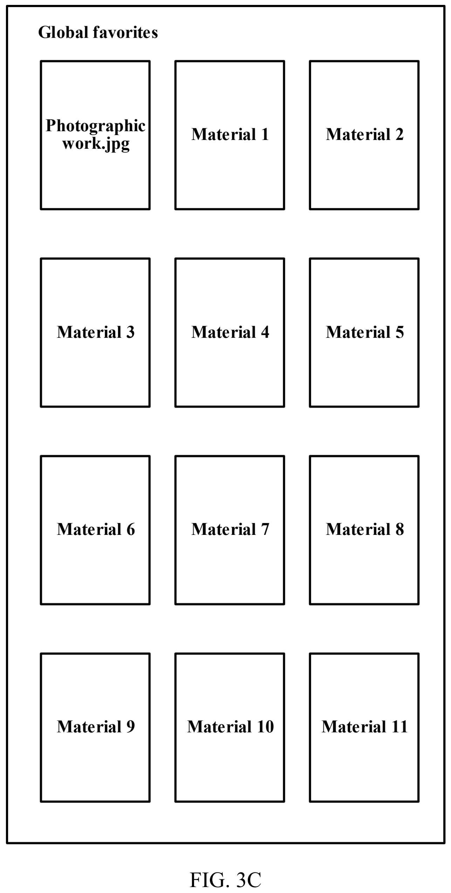

The floating window 310 includes a window control 311. By interacting with the window control 311, the user may perform operations such as moving, maximizing, and minimizing on the floating window 310. For example, the user may move the floating window 310 by touching the window control 311 and dragging the floating window 310 with a finger. For another example, the user taps the window control 311 to control the electronic device to display an operation bar near the window control 311. The operation bar includes a maximize button, a minimize button, and a close button. The user taps the maximize button in the window control 311 to maximize the floating window 310. The maximized floating window 310 is shown in FIG. 3C. The user may perform operations on these materials by interacting with these materials.

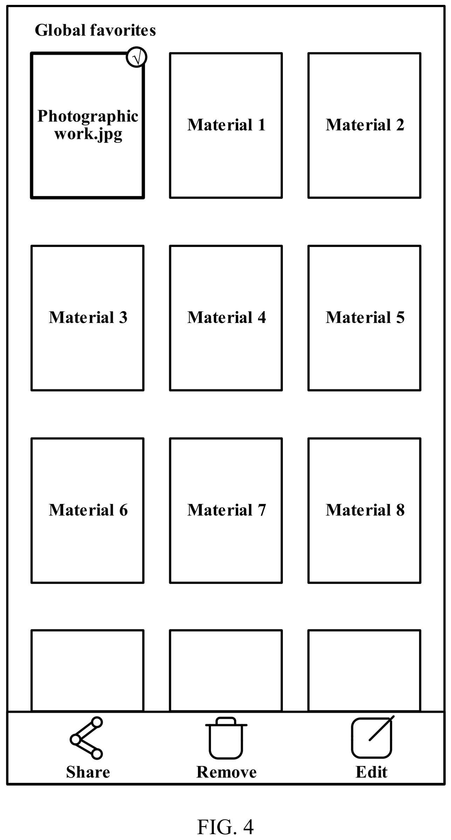

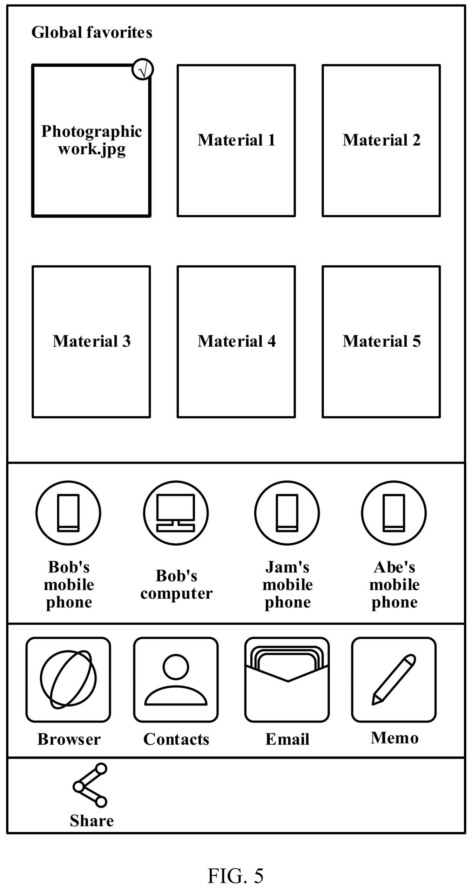

For example, in response to a touch and hold operation performed by the user on the "photographic work.jpg", the electronic device displays a toolbar on the interface. The toolbar includes various buttons. For example, as shown in FIG. 4, the toolbar includes a share button, a remove button, an edit button, and the like. In response to a tap operation performed by the user on the share button, the electronic device may display a sharing interface shown in FIG. 5. Icons representing different sharing manners are displayed on the sharing interface: for example, an icon for sharing a file to Bob's mobile phone, and an icon for sending a file to a WeChat friend through WeChat. The user controls, by tapping these icons, the electronic device to share the "photographic work.jpg" to a corresponding electronic device, contact, or application.

However, due to an actual requirement of the user, the user may need to convert the material into another format before sharing the material. The interface shown in FIG. 3C is still used as an example. It is assumed that the user hopes to share the shown "photographic work.jpg", but due to the actual requirement, the user needs to share the material in a pdf format. In this case, in a related technology, the user needs to first exit a global favorites interface, open an application with a format conversion function, and convert the format of the material "photographic work.jpg" into a pdf format by using the application. For ease of description, the material obtained through format conversion is referred to as a "photographic work.pdf" here. Next, the user adds the "photographic work.pdf" to the global favorites, opens the global favorites interface, and touches and holds an icon of the material "photographic work.pdf" on the global favorites interface, to share the material "photographic work.pdf". The operation is complex, resulting in low material sharing efficiency.

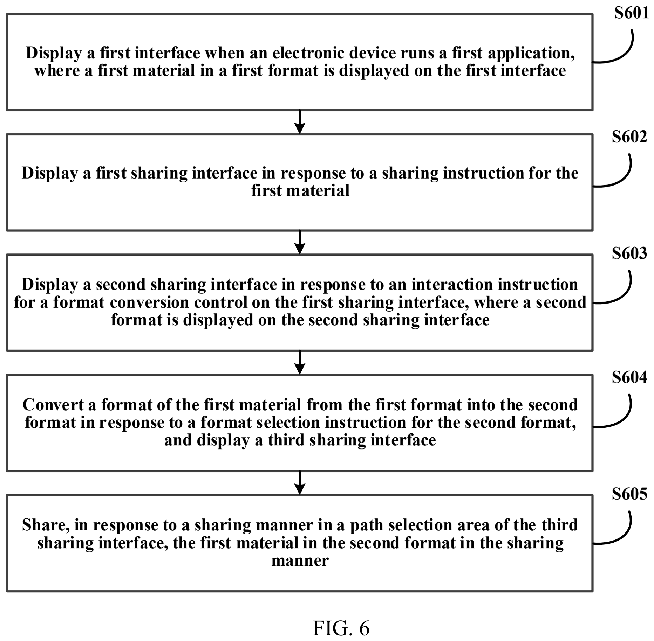

Based on this, this application provides a material sharing method, applied to any electronic device with a material sharing function, including but not limited to a mobile phone, a tablet computer, and the like. As shown in FIG. 6, the method includes:
Step S601: Display a first interface when an electronic device runs a first application, where a first material in a first format is displayed on the first interface.
Step S602: Display a first sharing interface in response to a sharing instruction for the first material.

The first sharing interface includes a sharing title area and a path selection area, the sharing title area of the first sharing interface includes a format conversion control and a format sub-area, the first format is displayed in the format sub-area of the first sharing interface, and a sharing manner of the first material in the first format is displayed in the path selection area of the first sharing interface.

Step S603: Display a second sharing interface in response to an interaction instruction for the format conversion control on the first sharing interface, where a second format is displayed on the second sharing interface.

The second format is different from the first format, and the first material is to be capable of being converted into the second format.

Step S604: Convert a format of the first material from the first format into the second format in response to a format selection instruction for the second format, and display a third sharing interface.

The third sharing interface includes a sharing title area and a path selection area. The sharing title area in the third sharing interface also includes a format sub-area and a format conversion control. In addition, because the format of the first material is converted into the second format in this case, the second format is displayed in the format sub-area of the third sharing interface, and a sharing manner of the first material in the second format is displayed in the path selection area of the third sharing interface.

Step S605: Share, in response to a sharing manner in the path selection area of the third sharing interface, the first material in the second format in the sharing manner.

The format conversion control is provided on the first sharing interface in this embodiment of this application, so that a user can select the second format through interaction with the format conversion control, to control the electronic device to convert the format of the first material from the original first format into the second format, and display the third sharing interface for the first material that has undergone the format conversion, to enable the user to share, via the displayed third sharing interface, the first material that has undergone the format conversion. This is equivalent to performing format conversion on the first material before sharing. In addition, the user can directly perform format conversion on a material on a sharing interface, after the format conversion, the sharing interface is automatically displayed for the material that has undergone the format conversion, without a need to manually open an application with a format conversion function or to manually search for a material that has undergone format conversion in an application with a sharing function. Therefore, operations are simple, and material sharing efficiency can be improved.

S601 to S605 are separately described below:

In S601, the first application is an application that has a material sharing capability and has a format conversion requirement. For example, the first application may include system applications such as global favorites, contacts, email, and browser, and may further include a notes application, a video application, a social application, and the like provided by a third party. It may be understood that materials included in a gallery are all pictures, and the user usually uses the gallery to browse or process the pictures. Therefore, it may be considered that when the electronic device runs the gallery, a material that the user wants to share is a picture, in other words, there is no format conversion requirement in this case. Therefore, in a possible embodiment, the first application does not include the gallery.

The first interface is an interface of the first application. For example, when the first application is global favorites, the first interface is displayed in FIG. 3C. Different first materials may have different formats, and therefore, there may be a plurality of different first formats.

In S602, a manner of inputting the sharing instruction by the user may be different based on different first applications. FIG. 4 shows only a manner of inputting the sharing instruction when the first application is global favorites. In another possible embodiment, the user may input the sharing instruction in another manner, for example, may drag an icon of the first material to a specified area (for example, the top of a screen), and for another example, the user may input the sharing instruction in a manner of continuously tapping a touchscreen of the electronic device by using a knuckle, and the like.

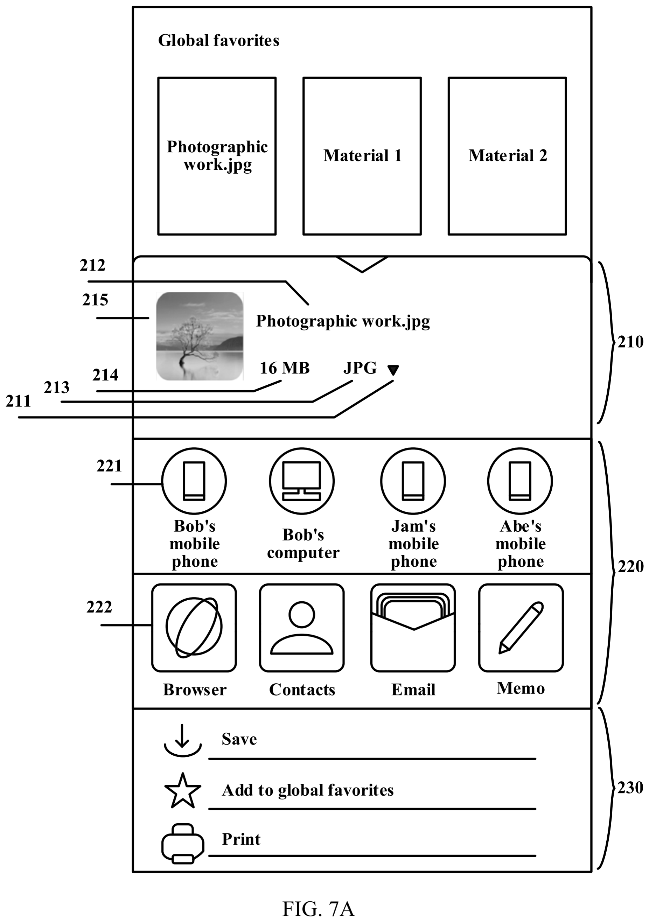

The first sharing interface is displayed over the first interface in a floating manner. For example, as shown in FIG. 7A, an inverted triangle icon on a first sharing interface shown in FIG. 7A is a format conversion control 211.

In addition, in addition to the format conversion control and the format sub-area for displaying the format of the first material, the sharing title area may further include sub-areas for displaying various information. Using an example shown in FIG. 7A as an example, a sharing title area 210 on the first sharing interface includes the format conversion control 211, a title sub-area 212, a format sub-area 213, an attribute sub-area 214, and a thumbnail sub-area 215.

In another possible embodiment, in addition to the format conversion control 211 and the format sub-area 213, the sharing title area 210 includes only some sub-areas of the title sub-area 212, the attribute sub-area 214, and the thumbnail sub-area 215, and the first sharing interface may further include other areas than the sharing title area 210 and a path selection area 220. Using FIG. 7A as an example, the first sharing interface further includes an atomic service area 230. For example, the atomic service area 230 may further include a "save" control, an "add to global favorites" control, and a "print" control. The following describes areas in the first sharing interface in detail, and details are not described herein again.

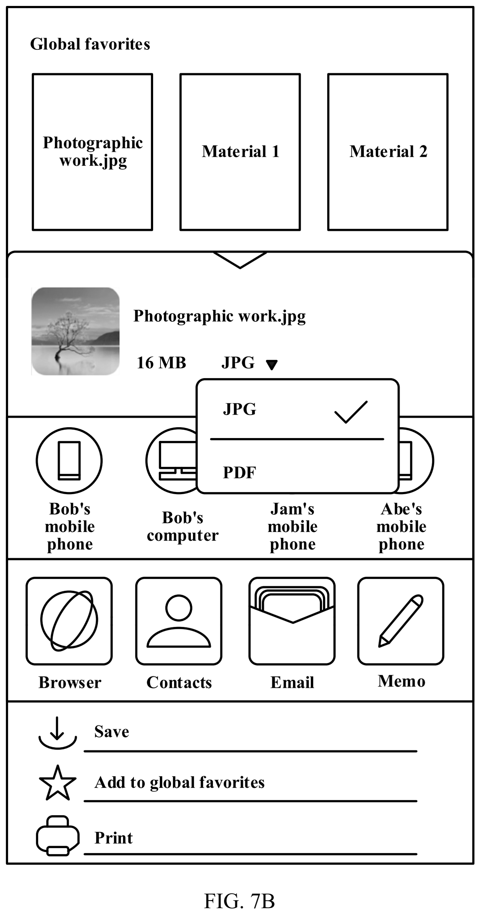

In S603, based on different format conversion controls, the interaction instruction for the format conversion control may be a tap operation instruction, a touch and hold operation instruction, or a slide operation instruction. For example, using FIG. 7A as an example, the interaction instruction may be a tap operation instruction of tapping the inverted triangle icon. In this example, in response to the interaction instruction, a floating window in each second format pops up below the inverted triangle icon. In this case, the electronic device displays a second sharing interface shown in FIG. 7B. In another possible example, the second sharing interface may alternatively be in another form. For example, a drop-down menu may be displayed in the format sub-area 213 based on the first sharing interface shown in FIG. 7A, to display the second sharing interface. Each option in the drop-down menu is in each second format.

The second format herein should be a format into which the first material selected based on the sharing instruction can be converted, and is different from the first format. For example, it is assumed that the first material is a picture in a JPG format, the picture may be converted into the JPG format, or may be converted into a PDF format, and the JPG format is the first format. Therefore, the second format is the PDF format.

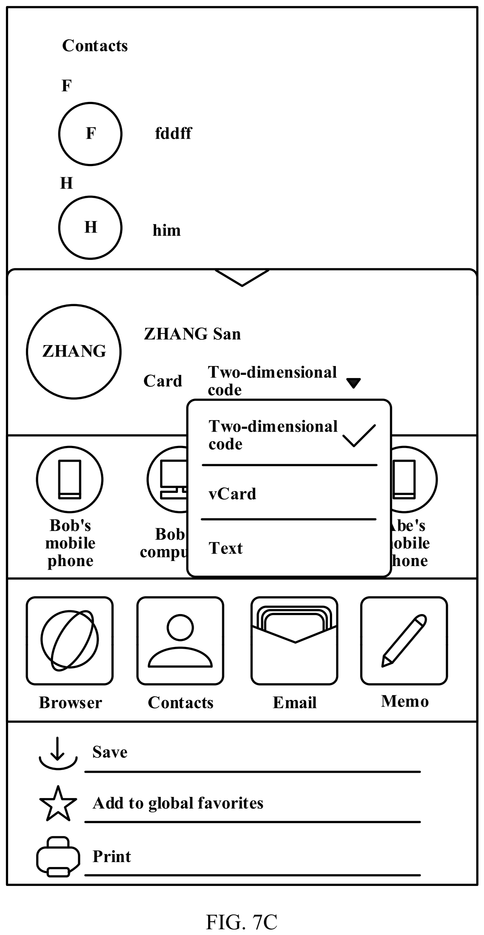

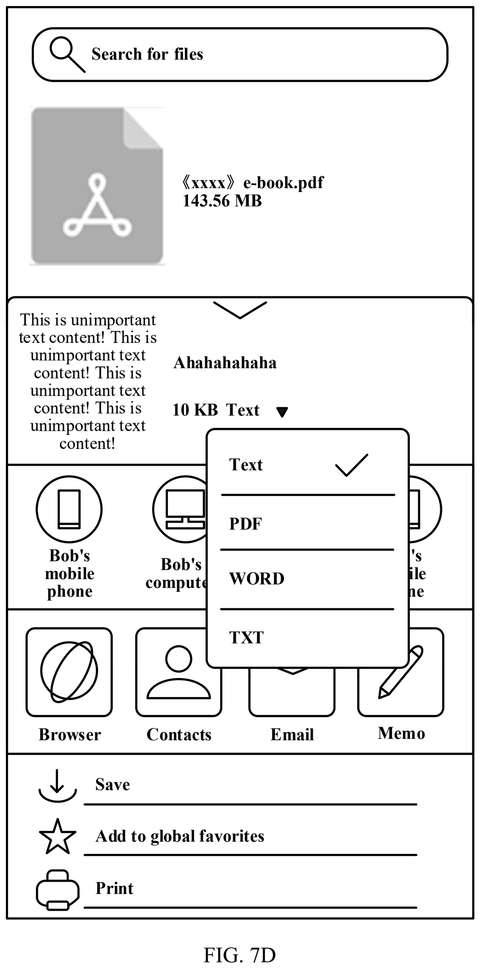

In a possible embodiment, the first format and the second format may be simultaneously displayed on the second sharing interface. Using FIG. 7B as an example, in an example shown in FIG. 7B, not only the second format (that is, the PDF format) is displayed on the second sharing interface, but also the first format (that is, the JPG format) is displayed. In addition, to distinguish the first format from the second format, in the example shown in FIG. 7B, a √ icon is added after the first format (that is, the JPG format). The following FIG. 7C and FIG. 7D are similar. In a possible case, to distinguish the first format from the second format, a name of the first format may be displayed in a dark color, which indicates that the first format is selected, and a name of the second format is displayed in a light color.

For another example, the first material is a contact card in a two-dimensional code format, and the contact card in the two-dimensional code format may be converted into a vCard format and a text format. Therefore, a two-dimensional code format, a vCard format, and a text format are displayed on a second sharing interface as shown in FIG. 7C. For another example, it is assumed that the first material is a document in the text format, the document in the text format may be converted into a PDF format, a WORD format, and a TXT format, a text format, a PDF format, a WORD format, and a TXT format are displayed on a second sharing interface, as shown in FIG. 7D.

When there are a plurality of first materials, an intersection of second formats preset for each first format is displayed. For example, assuming that the second formats preset for the text format include the PDF format and the TXT format, the second formats preset for a picture format include a JPG format and the PDF format, and two materials are selected based on the sharing instruction, where one material is text and the other material is a picture, the second format displayed on the second sharing interface is an intersection of {PDF format, TXT format} and {JPG format, PDF format}. To be specific, the displayed second format is the PDF format.

To describe a format into which first materials in each first format can be converted more clearly, refer to Table 1. Table 1 shows a possible correspondence between the first format and the second format. In another possible embodiment, the second formats preset for each file format may alternatively be different from Table 1. For example, the second format for a picture not only includes the JPG format and a long image, but also includes a BMP format. For another example, the second format for text may only include the PDF format and the TXT format, but not include the WORD format.

Corresponding second formats may be respectively set for different first formats in advance, so that the electronic device displays, according to the correspondence, a second format corresponding to a first format on the second sharing interface. For example, the correspondence may be shown in Table 1 below.

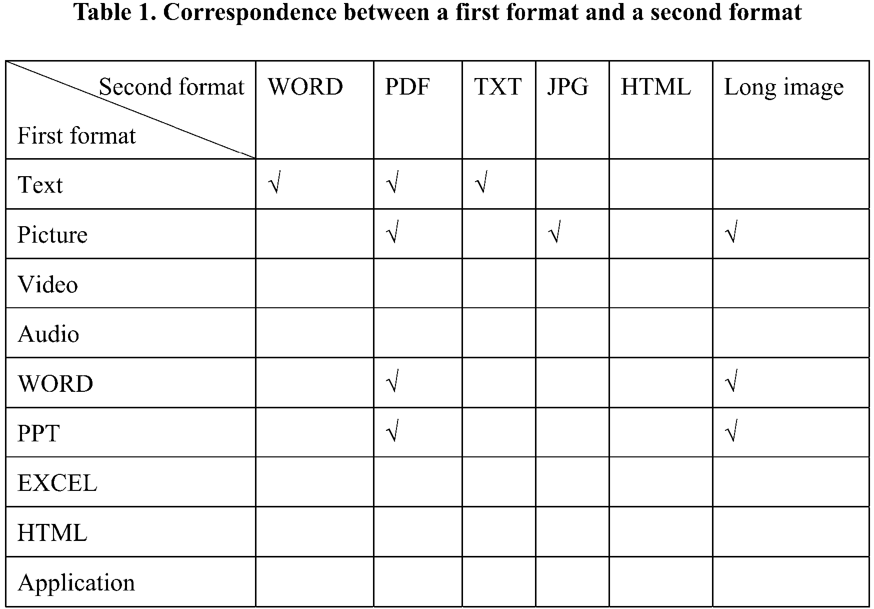

A first column in Table 1 represents the first format corresponding to each row. For example, a second row corresponds to a text format, a third row corresponds to a picture format, and a first row represents the second format corresponding to each column. For example, a second column corresponds to a WORD format, a third column corresponds to a PDF format, and each √ indicates that second formats corresponding to a first format represented in the row to which the √ belongs includes the second format represented in the column to which the √ belongs. For example, a √ in a second row and the second column indicates that when a first format is text, a corresponding second format includes the WORD format, and each blank entry indicates that for the second formats corresponding to a first format represented in the row to which the blank entry belongs, a second format represented in the column to which the blank entry belongs is not included. For example, a blank entry in a third row and second column indicates that when the first material is a picture, the second formats do not include the WORD format.

As shown in Table 1, for a case in which the first material is a picture, if the first material is one picture, the second format includes only the PDF format and the JPG format, but does not include a long-image format. If the first material is a plurality of pictures, the second format not only includes the PDF format and the JPG format, but also includes the long-image format.

When the first material is in the WORD or the PDF format, if there is one first material and a quantity of pages of the first material is not greater than a preset first page quantity threshold, the second format includes the PDF format, or if there are a plurality of first materials or a quantity of pages of the first materials is greater than a preset first page quantity threshold, the second format does not include the PDF format. If there is one first material and a quantity of pages of the first material is not greater than a preset second page quantity threshold, the second format includes the long-image format, or if there are a plurality of first materials or a quantity of pages of the first material is greater than a preset second page quantity threshold, the second format does not include the long-image format.

The first page quantity threshold and the second page quantity threshold are thresholds preset based on an actual requirement. For example, the first page quantity threshold is 200 pages, and the second page quantity threshold is 50 pages. For another example, the first page quantity threshold is 75 pages, and the second page quantity threshold is 75 pages. For still another example, the first page quantity threshold is 50 pages, and the second page quantity threshold is 80 pages. This is not limited in this embodiment.

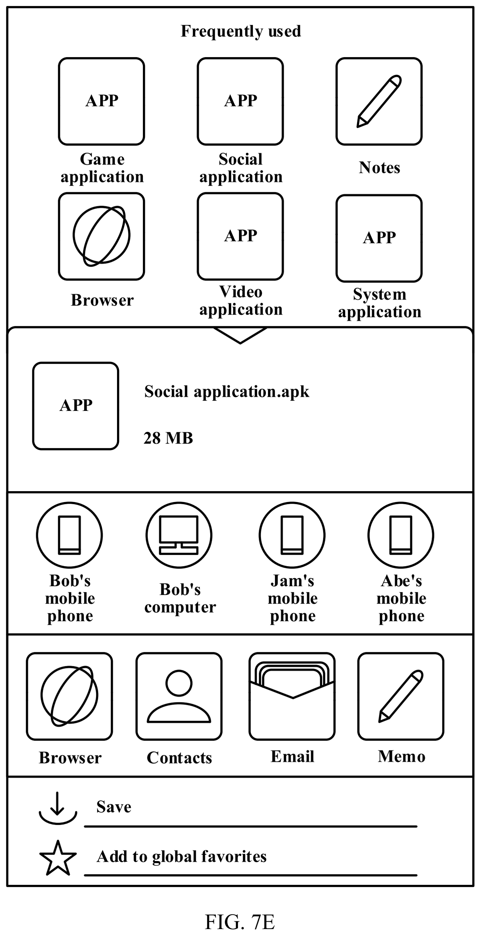

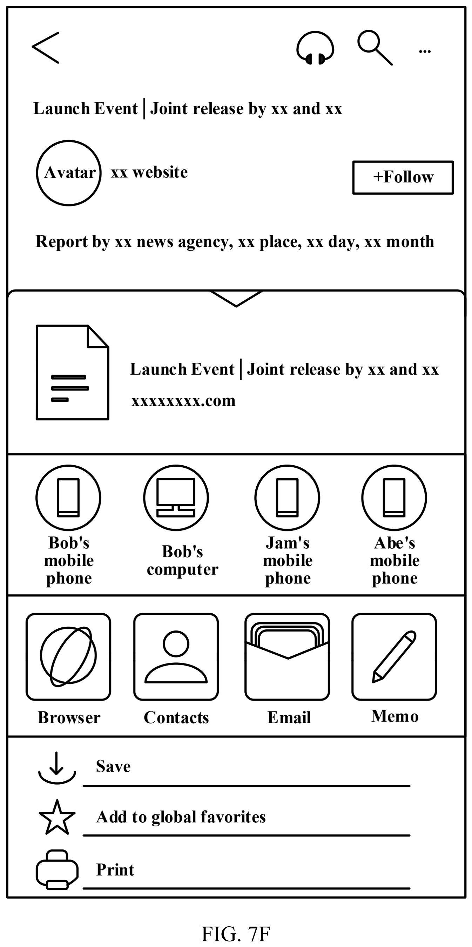

In addition, when the first material is audio, a video, HTML, or an application, it may be considered that the first material that the user hopes to share in this case is the first material in the first format. Therefore, as shown in Table 1, for the first material in the audio, video, HTML, or application format, the second format does not exist. Therefore, when the first material is a file in these file formats, the format conversion control 211 does not exist on the sharing interface. For example, when the first material is the application, a sharing interface is shown in FIG. 7E, and when the first material is the HTML, a sharing interface is shown in FIG. 7F.

In S604, the format selection instruction is an instruction that is inputted by the user based on an actual requirement and that indicates a file format into which the first material needs to be converted. Using the example shown in FIG. 7B as an example, the user may input the format selection instruction by tapping an area in which text "PDF" is located. The format selection instruction indicates the electronic device to convert the format of the first material into the PDF format.

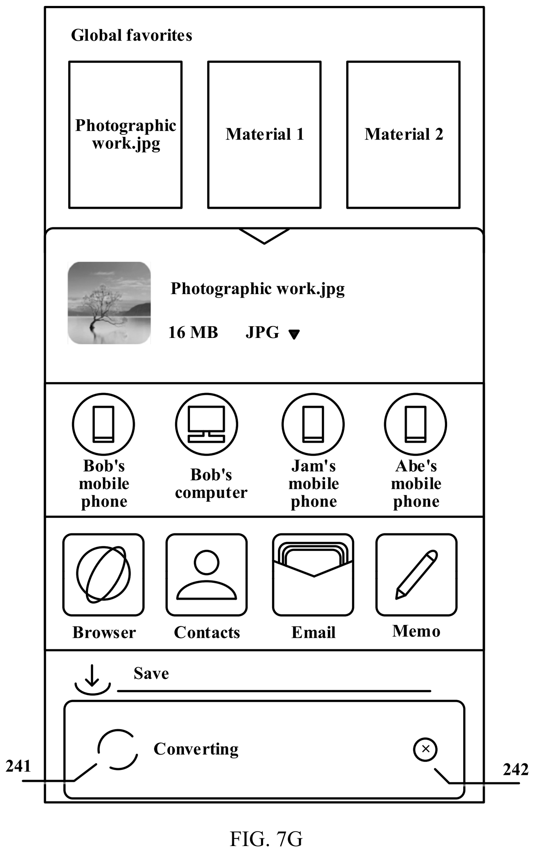

In a process of performing step S604, to remind the user that the current electronic device is performing format conversion, a converting interface may be displayed, and the user is reminded, in a form of a picture or text on the converting interface, that the current electronic device is performing format conversion. For example, text "Converting" and a waiting pattern 241 shown in FIG. 7G may be displayed on the converting interface. The text "Converting" and the waiting pattern 241 may be displayed in a pop-up window, a card, or a toast prompt.

In addition, as shown in FIG. 7G, a conversion cancel control 242 may be further provided on the converting interface. The user may interact with the conversion cancel control 242 through an operation such as tapping, touching and holding, or the like, to input an interaction instruction. In response to the interaction instruction for the conversion cancel control 242, the electronic device terminates performing step S604, and redisplays the first sharing interface.

The conversion cancel control 242 is provided on the converting interface, so that the user can cancel the format conversion based on an actual requirement. For example, if the user finds that there is no need to perform the format conversion on the first material, or if the user finds that the previously selected second format is incorrect, the user may tap the conversion cancel control 242 to control the electronic device to terminate the format conversion of the first material.

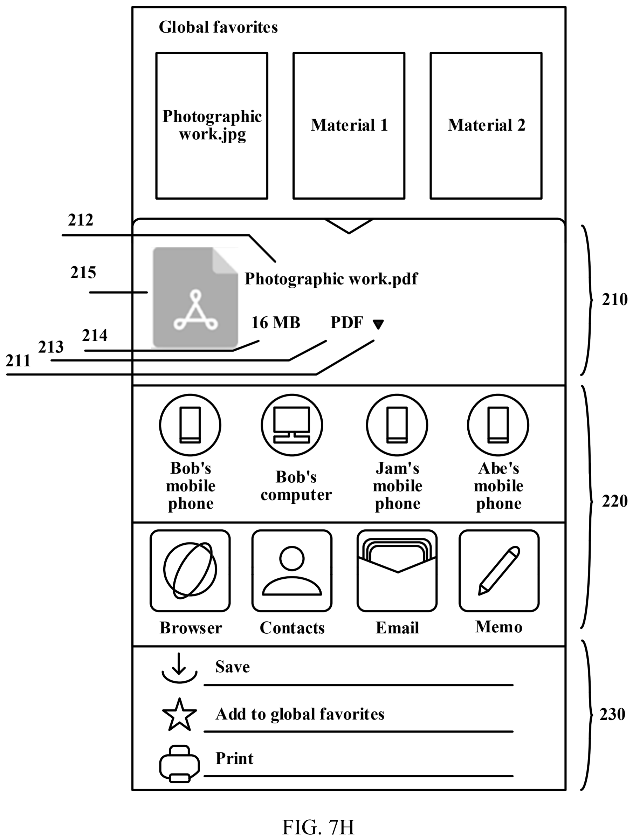

In addition, the third sharing interface displayed in S604 includes a same area as the first sharing interface, and each area includes a same sub-area. However, because the format of the first material is changed from the first format to the second format in this case, information displayed in each sub-area is changed accordingly. For example, an example in which the second sharing interface is shown in FIG. 7B is used. Assuming that the user taps "PDF format" in FIG. 7B to control the electronic device to convert the first material into the PDF format, and marks the first material converted into the PDF format as "photographic work.pdf", a displayed third sharing interface is shown in FIG. 7H. Compared with the first sharing interface, information displayed in the title sub-area 212, the format sub-area 213, and the thumbnail sub-area 215 of the third sharing interface all change. The information displayed in the title sub-area 212 changes from "photographic work.jpg" to "photographic work.pdf', and the information displayed in the format sub-area 213 changes from "JPG" to "PDF".

In S605, the sharing manner is inputted by the user through interaction with the path selection area of the third sharing interface, and the instruction indicates the electronic device to share the first material in the second format in which sharing manner. A detailed example of how the user inputs the sharing manner is provided in the following content related to the path selection area 220, and details are not described herein again.

In addition, if the user does not need to perform format conversion on the first material, the user may interact with the path selection area 220 on the first sharing interface to input a sharing manner, so as to control the electronic device to share the first material in the first format in the inputted sharing manner. Using the first sharing interface shown in FIG. 7A as an example, if the user hopes to directly share the "photographic workjpg" to Bob's mobile phone, the user may tap an icon of "Bob's mobile phone" in the path selection area 220 of the first sharing interface, to control the electronic device to share the "photographic work.jpg" to Bob's mobile phone.

The sharing title area 210, the path selection area 220, and the atomic service area 230 are separately described below.

For ease of description, the first sharing interface shown in FIG. 7A is used as an example below for description. It may be understood that the third sharing interface includes the same area as the first sharing interface, and a difference lies only in that because of a difference in the formats of the first material, information displayed in some areas of the first sharing interface and some areas of the third sharing interface may be different. For example, the first format is displayed in the format sub-area 213 of the first sharing interface, and the second format is displayed in the format sub-area 213 of the third sharing interface. Therefore, the following descriptions about areas of the first sharing interface also apply to the third sharing interface.

In addition, FIG. 7A is only a schematic diagram of a sharing interface according to this application. In another possible embodiment, the sharing interface may not be as shown in FIG. 7A. For example, the sharing interface does not include the path selection area 220 shown in FIG. 7A. For another example, the sharing interface does not include the atomic service area 230 shown in FIG. 7A. For still another example, the sharing interface further includes an area other than the sharing title area 210, the path selection area 220, and the atomic service area 230. In addition, the sharing interface shown in FIG. 7A is the sharing interface displayed in response to the sharing instruction when the electronic device runs the first application. A sharing interface (where the sharing interface is referred to as a fourth sharing interface below) displayed in response to the sharing instruction when the electronic device runs a second application does not include the sharing title area 210 shown in FIG. 7A, and includes the atomic service area 230 shown in FIG. 7A. The second application is different from the first application, that is, there is no intersection between the second application and the first application, and the second application includes at least a gallery. For example, the first application includes global favorites, and therefore, the second application should not include a global favorites service. However, the second application includes a gallery, and therefore, the first application should not include the gallery.

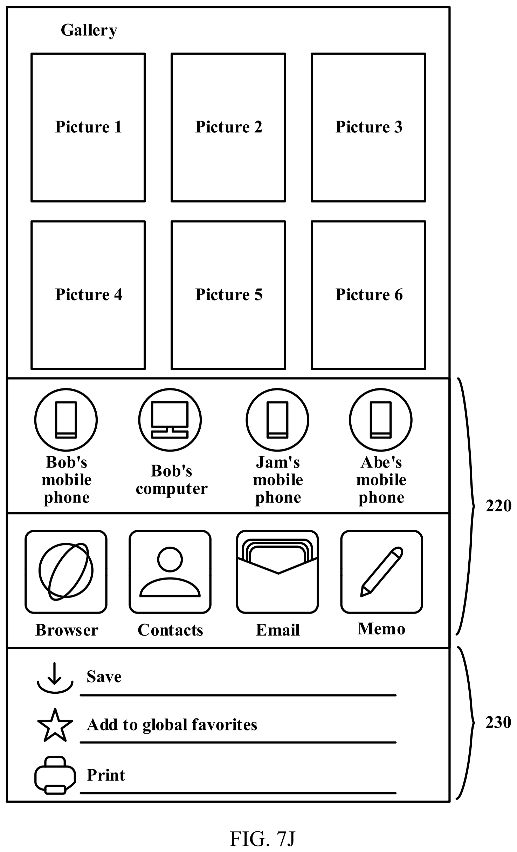

For example, in a possible embodiment, if the fourth sharing interface is shown in FIG. 7J, a path selection area 220 and an atomic service area 230 in FIG. 7J are the same as the path selection area 220 and the atomic service area 230 in FIG. 7A. Therefore, FIG. 7A is merely used as an example for descriptions below. Different from FIG. 7A, the fourth sharing interface shown in FIG. 7J does not include the sharing title area 210.

First, the sharing title area 210 is described. In the example shown in FIG. 7A, the sharing title area 210 includes the format conversion control 211, the title sub-area 212, the format sub-area 213, the attribute sub-area 214, and the thumbnail sub-area 215. The format conversion control 211 is configured to implement interaction with the user, to enable the user to control the electronic device to display each second sharing interface, so that the user selects the second format and controls the electronic device to convert the format of the first material into the second format. For how the user interacts with the format conversion control 211 and how the electronic device performs format conversion, refer to related content of step S603 and step S604. Details are not described herein again.

Sub-areas of the sharing title area 210 are separately described below.

The title sub-area 212 is for displaying a material name of the first material. For example, if the first material is a file "photographic work.jpg", the text "photographic work.jpg" is displayed in the title sub-area 212, as shown in FIG. 7A. If the first material is a document, the material name may refer to a name of the document, or may refer to a title of the document. For example, a document with a name of "learning material. doc", and content of the document is a paper with a title of "review of XXX technical field", the material name may be "learning material. doc", or may be "review of XXX technical field". The title sub-area 212 is provided on the sharing interface, so that the user can determine, based on information displayed in the title sub-area 212, the first material selected by the user, thereby reducing a possibility that the user shares an incorrect material.

In addition, in some application scenarios, the user may hope to share a plurality of materials at once, and therefore, there may be a plurality of first materials. In a possible embodiment, when there are a plurality of first materials, the electronic device may display material names of all first materials in the title sub-area 212, or may display file names of part of the first materials in the title sub-area 212, for example, only display a file name of one first material. In this case, a quantity of first materials refers to a quantity of first materials that the user selects to share, rather than a total quantity of all first materials displayed on the first interface.

In another possible embodiment, only when there is one first material, the electronic device displays the material name of the first material in the title sub-area 212, and when there are a plurality of first materials, the electronic device displays the quantity of first materials in the title sub-area 212. It can be avoided, by using this embodiment, that excessive text is displayed in the title sub-area 212 when there are a plurality of first materials, so that the title sub-area 212 is simpler, and the user can more easily obtain related information about the first material from the title sub-area 212.

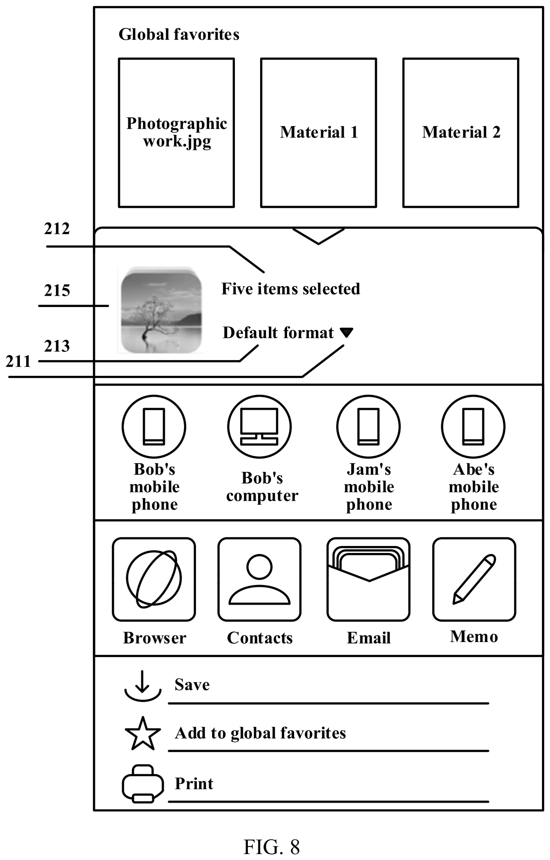

For example, assuming that there are five first materials, as shown in FIG. 8, the electronic device displays text "five items selected" in the title sub-area 212. In another example, the displayed text may alternatively be text "five files in total", "five items are currently selected", and the like that can indicate that there are five first materials. This is not limited in the example shown in FIG. 8.

Still using FIG. 7A as an example, the format sub-area 213 is for displaying a file format of the first material. For example, if the first material is the file "photographic work.jpg", text "JPG" is displayed in the format sub-area 213, as shown in FIG. 7A. The format sub-area 213 is provided on the sharing interface, so that the user can determine a current format (that is, the first format) of the first material based on information displayed in the format sub-area 213, so as to determine whether the format of the first material needs to be converted.

In addition, when there are a plurality of first materials, in a possible embodiment, the electronic device may display formats of all the first materials in the format sub-area 213, or may display formats of part of the first materials in the format sub-area 213.

In another possible embodiment, only when there is one first material, the electronic device displays the format of the first material in the format sub-area 213, and when there are a plurality of first materials, the electronic device display text information representing a default format in the format sub-area 213. It may be understood that when there are a plurality of first materials, file formats of the first materials may be different. Therefore, it is difficult to briefly display the file formats of the first materials in the format sub-area 213. Because all the first materials may be considered to be in a default format before format conversion is not performed, the text information representing the default format can simultaneously represent different file formats. In other words, the file formats of the first materials can be briefly represented in the format sub-area 213 by using this embodiment, thereby helping the user to determine whether the format conversion needs to be performed.

For example, as shown in FIG. 8, text information displayed in the format sub-area 213 is "default format". In another possible example, the text information displayed may alternatively be text information that can represent the default format, such as "default format" or "an original format".

In addition, it may be understood that, for the first material that has undergone the format conversion, the displayed format sub-area 213 on the third sharing interface represents the second format selected by the user in step S603.

Still using FIG. 7A as an example, the attribute sub-area 214 is for displaying a target attribute of the first material. For example, assuming that the target attribute is a data volume, and the data volume of the first material is 16 MB, as shown in FIG. 7A, the electronic device displays text "16 MB" in the attribute sub-area 214. For another example, assuming that the target attribute is a geographic location, and the first material is a photo taking in XX city, the geographic location is "XX city", in this example, the electronic device displays text "XX city" in the attribute sub-area 214. In addition, in a possible embodiment, if the target attribute is the geographic location, when the electronic device does not enable a privacy protection mode, the electronic device displays the geographic location of the first material in the attribute sub-area 214; or when the electronic device already enables a privacy protection mode, the electronic device does not display the geographic location of the first material in the attribute sub-area 214.

The attribute sub-area 214 is provided on the sharing interface, so that the user can determine, based on the attribute information displayed in the attribute sub-area 214, whether format conversion needs to be performed on the first material and/or whether the first material needs to be shared, thereby implementing more accurate format conversion and file sharing. For example, if the target attribute is the data volume, the user determines, based on the attribute information displayed in the attribute sub-area 214, that the data volume of the first material is excessively large, and that much time needs to be consumed to perform the format conversion, and therefore, the user chooses not to perform the format conversion on the first material. For another example, if the target attribute is the geographic location, and the geographic location of the first material is "XX city", however, the user hopes to share, with a friend, a picture taken when the user is traveling in YY city, the user may determine, based on the attribute information displayed in the attribute sub-area 214, that the first material does not need to be shared.

The target attribute depends on an application (that is, the first application) running at the foreground of the electronic device when the sharing instruction is received. For example, if the user inputs the sharing instruction for a picture in global favorites in a process of using the global favorites, the target attribute is an attribute corresponding to the global favorites. For another example, if the user inputs the sharing instruction for a page in a process of using a browser, the target attribute is an attribute corresponding to the browser. For still another example, if the user inputs the sharing instruction for a page in a process of using a file manager, the target attribute is an attribute corresponding to the file manager.

An attribute corresponding to each application may be different based on different application scenarios. For example, in a possible embodiment, an attribute corresponding to the global favorites and the file manager is the data volume. In another possible embodiment, an attribute corresponding to a file management service is a file size, and an attribute corresponding to the global favorites is the geographic location. In still yet another possible embodiment, an attribute corresponding to the file management service is a storage path of a material, and an attribute corresponding to the global favorites is a location.

An attribute corresponding to the browser is a website. For example, when the user browses a website whose website is "XXXX.com" by using a browser service, the user inputs the sharing instruction for an article on the website, in this case, the first material is the article, and the electronic device displays text "XXXX.com" in the attribute sub-area 214.

An attribute corresponding to a contact card application is an application name, that is, a contact card. For example, in a process of using a contact card service, the user inputs the sharing instruction for one card, in this case, the first material is the card, and the electronic device displays text "contact card" in the attribute sub-area 214.

The thumbnail sub-area 215 is for displaying a thumbnail of the first material, so that the user can more intuitively determine content and/or a file format of the first material by using the displayed thumbnail. Thumbnails of first materials in different first formats are separately described below.

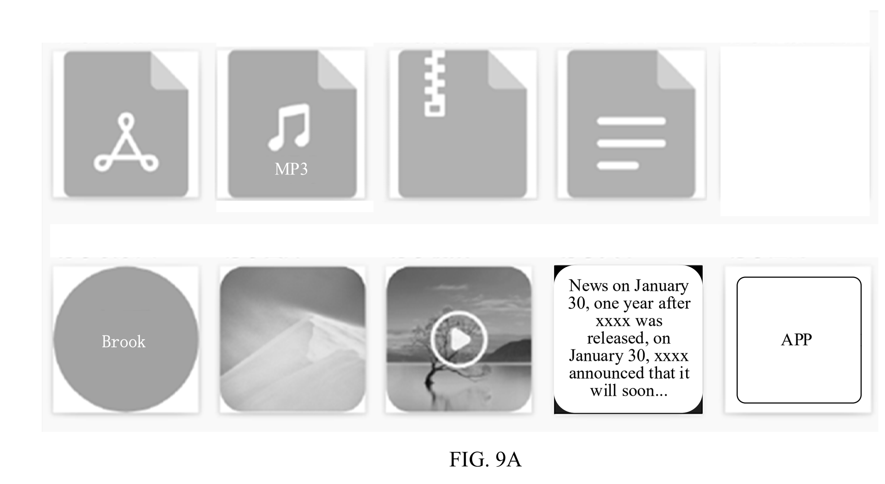

FIG. 9A shows thumbnails of first materials in various file formats. A first row sequentially includes, from left to right, a thumbnail of the first material in a pdf format, a thumbnail of the first material in an audio format, a thumbnail of the first material in a compressed package format, and a thumbnail of the first material in a web page connection format. A second row sequentially includes, from left to right, a thumbnail of the first material in a contact card format, a thumbnail of the first material in a picture format, a thumbnail of the first material in a video format, a thumbnail of the first material in a text format, and a thumbnail of the first material in an application format.

Text displayed in the thumbnail of the first material in the contact card format is a first character in the name of the contact. The thumbnail of the first material in the video format is a video cover on which a play button is displayed. Text displayed in the thumbnail of the first material in the text format is some or all of the text in the first material. The thumbnail of the first material in the application format is an icon of the first material.

When there are a plurality of first materials, the electronic device stacks the thumbnails of the first materials, to obtain a stacked thumbnail, and display the stacked thumbnail in the thumbnail sub-area. In a possible embodiment, the electronic device may stack the thumbnails of all the first materials to obtain the stacked thumbnail. In another possible embodiment, the electronic device may stack thumbnails of some first materials to obtain a stacked thumbnail. In still another possible embodiment, if a quantity of first materials is not greater than N, the electronic device stacks the thumbnails of all the first materials to obtain the stacked thumbnail. If a quantity of first materials is greater than N, the electronic device stacks thumbnails of first N first materials to obtain a stacked thumbnail.

N is a preset positive integer greater than 1. For example, N may be 2, 3, 4, or another value. The first N first materials refer to first N shared files in a precedence sequential of selecting the first materials based on the sharing instruction. For example, assuming that N=3, and the user sequentially selects a file A, a file B, a file C, and a file D as the first materials when selecting the first materials, the first N first materials are the file A, the file B, and the file C.

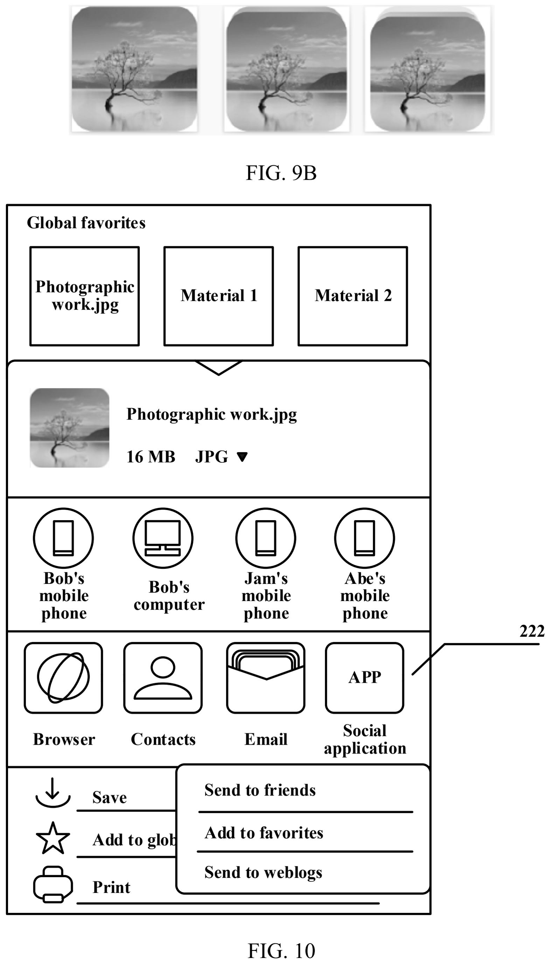

FIG. 9B is a schematic diagram of stacked thumbnails according to this application. The stacked thumbnails are respectively shown from left to right in FIG. 9B: A thumbnail of a first material, a stacked thumbnail obtained by stacking thumbnails of two first materials, and a stacked thumbnail obtained by stacking thumbnails of three first materials. In this example, a size of the thumbnail of the first material and the stacked thumbnails obtained through stacking are all 48 pixels*48 pixels, and a size of a rounded corner is 8 dp.

For the stacked thumbnail obtained by stacking the thumbnails of the two first materials, a size of a thumbnail stacked at the front is 46 pixels*46 pixels, and an opacity is 100%; and a size of a thumbnail stacked at the rear is 44 pixels*44 pixels, and an opacity is 60%. For a stacked thumbnail obtained by stacking the thumbnails of the first three materials, a size of a thumbnail stacked at the front is 44 pixels*44 pixels, and an opacity is 100%; a size of a thumbnail stacked at the middle is 42 pixels*42 pixels, and an opacity is 60%; a size of a thumbnail stacked at the rear is 40 pixels*40 pixels, and an opacity is 20%.

Next, the path selection area 220 is described. In the example shown in FIG. 7A, the path selection area 220 includes one or more device icons 221 and one or more application icons 222.

Each device icon 221 corresponds to one device. The user may input a sharing manner through interaction with the device icon 221. In response to the sharing manner, the electronic device shares the first material in the second format with a device corresponding to the device icon 221. For example, using FIG. 7H as an example, if the 1^{st} device icon 221 from the left corresponds to a device "Bob's mobile phone", the electronic device shares the material "photographic work. pdf" to the device "Bob's mobile phone" in response to the sharing manner inputted by the user through interaction with the device icon 221.

Each application icon 222 corresponds to one application, and the user may input a confirmation instruction through interaction with the device icon 221. In response to a sharing manner, the electronic device shares the first material in the second format by using an application corresponding to the application icon 222. For example, using FIG. 7H as an example, the 3^{rd} application icon 222 from the left corresponds to an application "email", and in response to the sharing manner inputted by the user through interaction with the application icon 222, the electronic device shares the material "photographic work. pdf' by using the application "email", in other words, the electronic device sends the file "photographic work. pdf' to a specified mailbox through an email.

Certainly, the path selection area 220 may alternatively include one or more contact icons. Each contact icon corresponds to one contact. The user may input a sharing manner through interaction with the contact icon. In response to the sharing manner, the electronic device shares the first material in the second format with a contact corresponding to the contact icon. Each contact icon may be represented in a manner such as an avatar or a name of a corresponding contact.

The user may input a sharing manner by tapping the device icon 221 or the application icon 222, or may input the sharing manner by touching and holding the device icon 221 or the application icon 222. It may be understood that, some applications provide a plurality of different sharing manners. For example, a social application with a network log function provides a plurality of different sharing manners below:
Manner 1: Send the first material to a friend.
Manner 2: Issue the first material as a network log.
Manner 3: Send the first material to a server of a social application provider, to collect the first material by using a collection function provided by the social application.

For these applications provided with a plurality of different sharing manners, in response to an interaction instruction of the user for the application icon 222 corresponding to the application, such as a tap operation or a touch and hold operation, the electronic device displays the sharing manners provided by the application for the user to perform selection. For example, as shown in FIG. 10, in an example shown in FIG. 10, in response to the interaction instruction for the application icon 222, the electronic device displays, in a form of a floating window, the sharing manners provided by the application.

The user may input a sharing manner, to control the electronic device to share a material in the second format in the sharing manner inputted by the user. Using FIG. 10 as an example, the user may input a sharing manner by tapping an area in which text "Send to friends" is located. In this case, the sharing manner inputted by the user is the foregoing Manner 1. Alternatively, the user may input the sharing manner by tapping an area in which text "Add to favorites" is located. In this case, the sharing manner inputted by the user is the foregoing Manner 3.

Limited by a size of a display screen of the electronic device, the path selection area 220 cannot simultaneously display all device icons 221 and all application icons 222. For example, in FIG. 7A, four device icons 221 and four application icons 222 are simultaneously displayed in the path selection area 220, and remaining device icons 221 and application icons 222 are not displayed in the path selection area 220. The user may control, by using an interaction instruction such as sliding or dragging, the electronic device to switch the device icon 221 and the application icon 222 displayed in the path selection area 220.

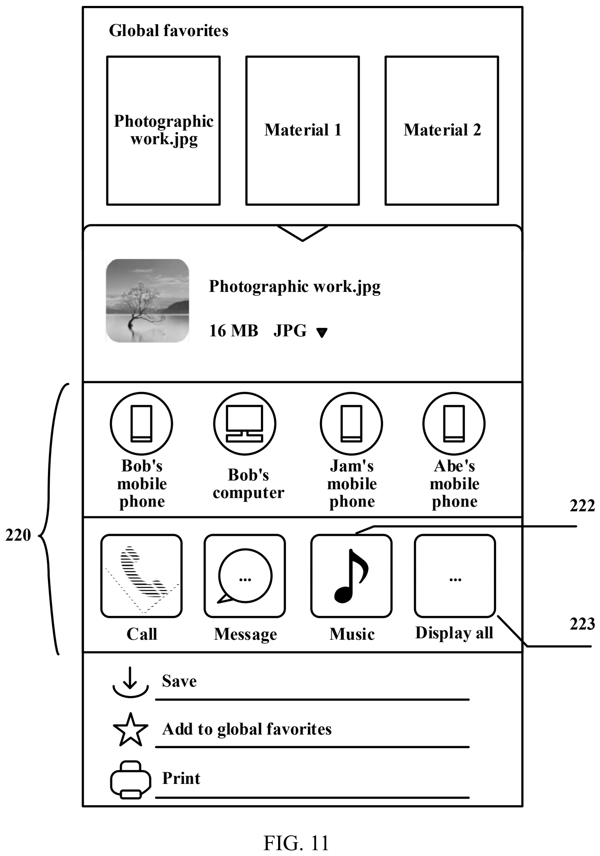

For example, refer to FIG. 7A and FIG. 11. The four application icons 222 displayed in the path selection area 220 in FIG. 7A are respectively application icons 222 corresponding to an application "browser", an application "contacts", an application "email", and an application "memo". The user may control, for a slide operation on the area in which the application icon 222 is located, the electronic device to switch the application icon 222 displayed in the path selection area 220 to that shown in FIG. 11. Application icons 222 displayed in the path selection area 220 in FIG. 11 are respectively application icons 222 corresponding to an application "call", an application "message", and an application "music". In addition, in the example in FIG. 11, all display controls 223 are further displayed in the path selection area 220. In another possible example, the path selection area 220 may not include all the display controls 223.

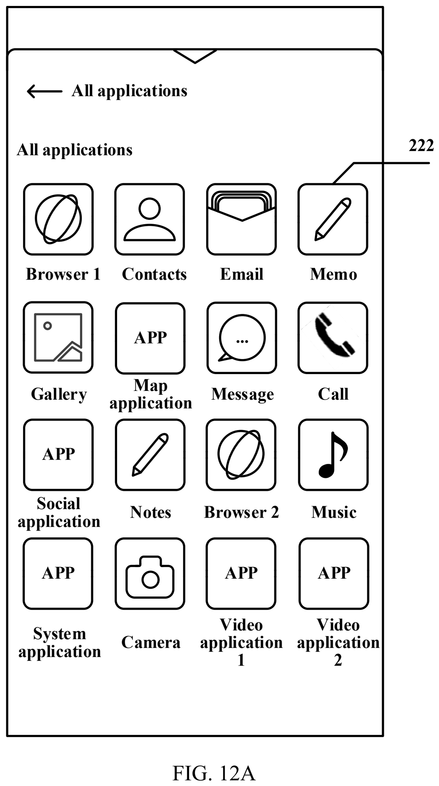

In response to an interaction instruction of the user for all the display controls 223, the electronic device displays an application selection interface. Application icons 222 are displayed on the application selection interface. A size of the application selection interface is to be larger than a size of the path selection area 220. For example, the application selection interface may be shown in FIG. 12A. The user may input the confirmation instruction through interaction with the application icon 222 on the application selection interface. An interaction manner is the same as an interaction manner between the user and the application icon 222 in the path selection area 220. Refer to related descriptions above. Details are not described herein again.

By providing all the display controls 223, the user can control, by using all the display controls 223, the electronic device to display the application selection interface. Because the size of the application selection interface is larger than the size of the path selection area 220, more application icons 222 can be simultaneously displayed on the application selection interface, so that the user can conveniently choose which application to use for sharing the first material.

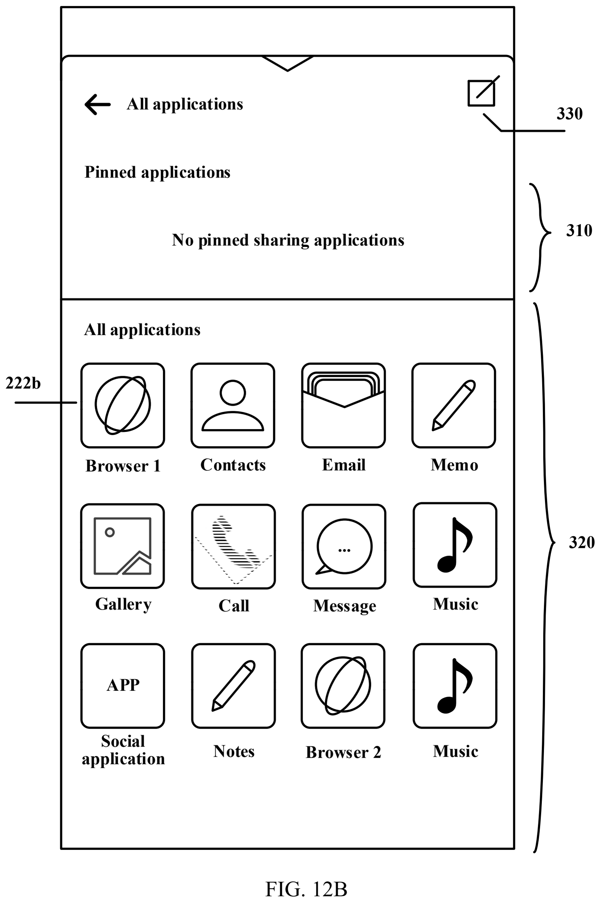

When there are excessively many application icons 222 simultaneously displayed on the application selection interface, it may be difficult for the user to find a needed application icon 222 from a large quantity of application icons 222. Based on this, in a possible embodiment, the application selection interface is provided with a first display area 310 and a second display area 320, as shown in FIG. 12B. In an example shown in FIG. 12B, the first display area 310 is located at the top of the application selection interface, and the first display area 310 is for displaying the application icon 222. Therefore, the first display area 310 in this example may also be referred to as a pinned application area. In another possible embodiment, the first display area 310 may alternatively be located at a position such as a left side, a right side, or the bottom of the application selection interface.

In this example, there are two types of application icons 222, which are respectively denoted as first-type application icons 222a and second-type application icons 222b. A quantity of the first-type application icons 222a needs to be less than a preset quantity threshold, and the quantity threshold may be 4, 5, or another positive integer. There is no intersection between the first-type application icons 222a and the second-type application icons 222b, and a union of the first-type application icons 222a and the second-type application icons 222b is all the application icons 222.

The first display area 310 is for displaying the first-type application icons 222a, and the second display area 320 is for displaying the second-type application icons 222b. Because the quantity of the first-type application icons 222a is less than the preset quantity threshold, in other words, a quantity of application icons 222 displayed in the first display area 310 is small, if an application icon 222 required by the user belong to the first-type application icons 222a, the user can conveniently find the required application icon 222 from the first display area 310. That is, speed at which the user finds the required application icon 222 is effectively improved, thereby improving file sharing efficiency.

The user may set the first-type application icons 222a based on an actual requirement. For example, if the user usually shares a file by using an application "browser", the user may set an application icon 222 corresponding to the application "browser" as the first-type application icons 222a, and an application icon 222 that is not set by the user as the first-type application icons 222a belongs to the second-type application icons 222b. In a case in which the user does not set the first-type application icons 222a, as shown in FIG. 12B, the application icon 222 is not displayed in the first display area 310, and text "no shared application pinned" is displayed.

For a manner in which the user sets the first-type application icons 222a, refer to FIG. 12B. An edit control 330 is provided at an upper right corner of the application selection interface shown in FIG. 12B. In another example, the edit control may alternatively be located at another position of the application selection interface, such as an upper left corner or a right sidebar.

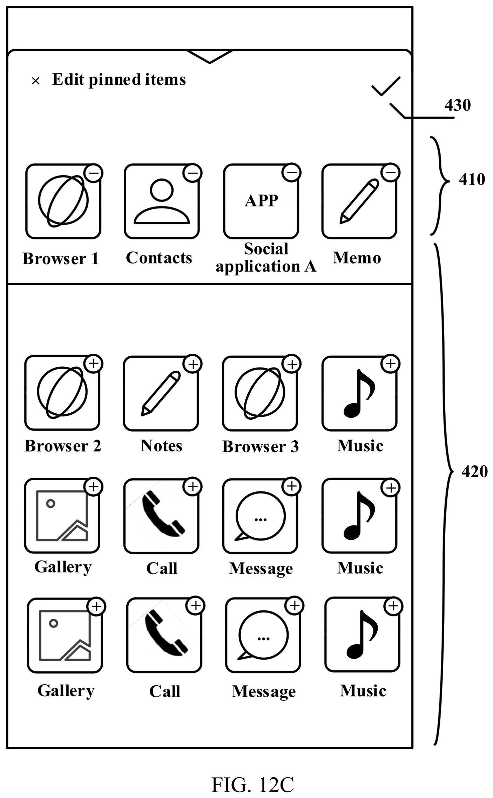

In response to an interaction instruction for the edit control, the electronic device displays an icon editing interface. For example, the icon editing interface may be shown in FIG. 12C, and includes a selected area 410 and a candidate area 420. The first-type application icons 222a are initially displayed in the selected area, and the second-type application icons 222b are initially displayed in the candidate area 420. For example, in the example shown in FIG. 12B, because there is no first-type application icon 222a in the example, and all the application icons 222 are the second-type application icons 222b, when the icon editing interface is displayed, no application icon 222 is initially displayed in the selected area 410, and all the application icons 222 are displayed in the candidate area 420.

The user may interact with the application icons 222 on the icon editing interface, to control the electronic device to move the application icons 222 displayed in the selected area 410 to the candidate area 420, and move the application icons 222 displayed in the candidate area 420 to the selected area 410. In addition, the user may further adjust a sequence of the application icons 222 in the selected area 410 by dragging the application icons 222 displayed in the selected area 410. For example, if the user drags an icon "contacts" to the left of an icon "browser", the sequence may be adjusted from the icon "browser"→the icon "contacts"→an icon "social application A"→an icon "memo" to the icon "contacts"→the icon "browser"→the icon "social application A"→the icon "memo".

In addition, the user may input an editing completion instruction by tapping an editing completion control 430 of the icon editing interface. In another example, the editing completion control 430 may alternatively be located at another position of the icon editing interface. In response to the editing completion instruction, the electronic device sets the application icons 222 displayed in the selected area 410 as the first-type application icons 222a, and sets the application icons 222 displayed in the candidate area 420 as the second-type application icons 222b.

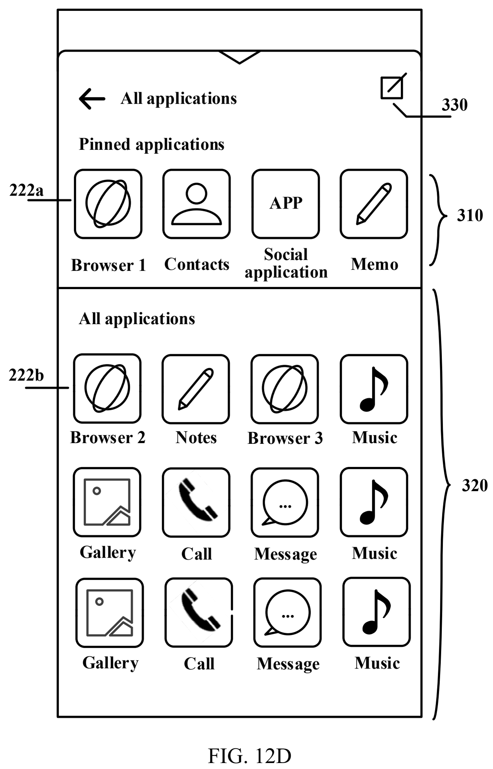

For example, using the example shown in FIG. 12C as an example, the user taps the editing completion control 430 at an upper right corner to input the editing completion instruction. In this example, the application icons 222 displayed in the selected area 410 include an icon "browser 1", an icon "contacts", an icon "social application A", and an icon "memo". Therefore, in response to the editing completion instruction, the electronic device sets the icon "browser", the icon "contacts", the icon "social application A", and the icon "memo" as the first-type application icons 222a, and sets another application icon 222 as the second-type application icons 222b. In addition, the electronic device redisplays the application selection interface. In this case, the displayed application selection interface is shown in FIG. 12D. A sequence of the application icons 222 in the first display area 310 is to be the same as a sequence of the application icons 222 in the selected area 410 on the icon editing interface.

Finally, the atomic service area 230 is described. An atomic service control 231 is provided in the atomic service area 230. Atomic service controls 231 corresponds to different atomic services. In response to an interaction instruction of the user for the atomic service control, the electronic device performs, on the first material, an atomic service corresponding to the atomic service control.

Using the example shown in FIG. 7A as an example, three types of atomic service controls 231 are displayed in the atomic service area 230, and are sequentially from top to bottom: a control "save", a control "add to global favorites", and a control "print". Services corresponding to the controls are described in detail below, and details are not described herein again.

The atomic service controls 231 displayed in the atomic service area 230 depends on a service that is run at the foreground when a sharing instruction is received (where the service is referred to as a sharing source below) and a file format of the first material. Refer to Table 2, in a possible embodiment, atomic service controls 231 displayed in cases of different services and different file formats are shown in Table 2.

**Table 2. Correspondence in a sharing source, a file format, a second format, and an atomic service**

| Sharing source | First material | Second format | Atomic service |
|---|---|---|---|
| Notes | Text/Single note | Picture, text, DOC, PDF, and HTML | None |
| | Picture/Audio/HTML | Switching not supported | None |
| Schedule | Schedule | Picture, text, and calendar (VCS) | None |
| Phone | Contacts | Two-dimensional code, Vcard, and text | None |
| Global favorites | Text/Single picture/Single document | Refer to Table 1 and related descriptions | Print, save to text notes, save to Evernote, save to file manager, and add to global favorites |
| | A plurality of pictures/A plurality of documents | | Save to text notes, save to Evernote, save to file manager, and add to global favorites |
| | Video | | Save to Evernote, save to file manager, and add to global favorites |
| | Application | | Save to file manager and add to global favorites |
| | html | | Save to text notes, save to Evemote, and add to global favorites |
| | Compressed package | | Add to global favorites |

Using a row in which a sharing source is "notes" and the first material is "text/single note" in Table 2 as an example, that second formats in the row are "picture, text, DOC, PDF, and HTML" indicates that when the sharing source is notes and the first material is text or a single note, the second formats include a picture, text, DOC, PDF, and HTML. That an atomic service in this row is "none" indicates that when the sharing source is notes and the first material is text or a single note, no atomic service control 231 is provided in the atomic service area 230. In other words, the sharing interface displayed in this case may not include the atomic service area 230.

For another example, using a row in which a sharing source is "global favorites" and the first material is "text/single picture/single document" in Table 2 as an example, that a second format in the row is "refer to Table 1 and related descriptions" indicates that when the sharing source is global favorites and the first material is text, a single picture, or a single document, for the second format, refer to related descriptions in Table 1. That atomic services in this row are "print, save to text notes, save to Evernote, save to file manager, and add to global favorites" indicate that when the sharing source is global favorites, and the first material is text, a single picture, or a single document, atomic service controls 231 respectively corresponding to the atomic service "print", the atomic service "save to text notes", the atomic service "save to Evernote", the atomic service "save to file manager", and the atomic service "add to global favorites" are provided in the atomic service area 230.

Other entries in Table 2 are similar, and details are not described herein again. Atomic services are separately described below.

The atomic service "print" means printing the first material by using a printer establishing a communication connection with the electronic device.

The atomic service "save to text notes" means saving the first material in notes generated by a system application "text notes".

The atomic service "save to Evernote" means saving the first material in the notes generated by a third-party application "Evemote".

The atomic service "add to global favorites" means favoriting the first material in a file set maintained by a system application "global favorites".

As shown in Table 2, because file formats of the first material are different, the electronic device displays, on the sharing interface, the atomic service controls 231 corresponding to different atomic services. Therefore, when format conversion is performed on the first material and the sharing interface is redisplayed, in other words, when step S601 is performed again from the foregoing step S604, the atomic service controls 231 included in the atomic service area 230 on the redisplayed sharing interface may change.

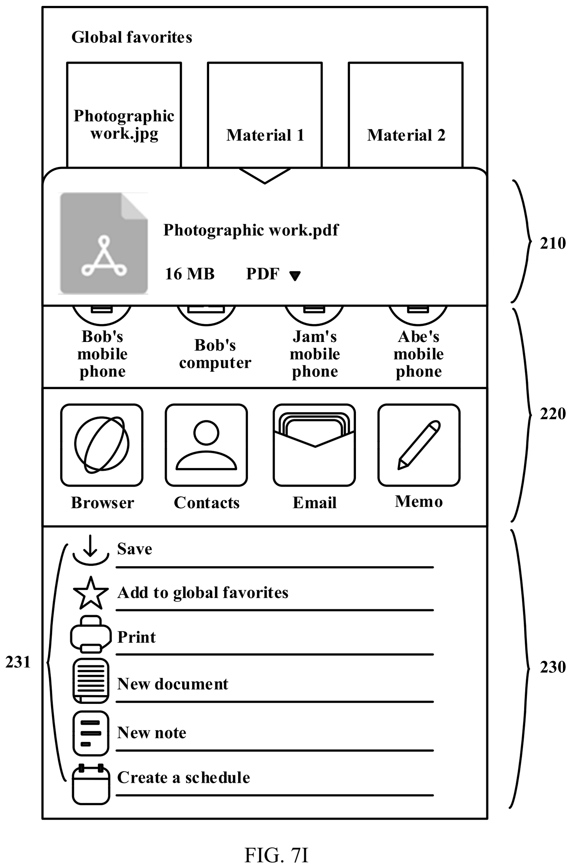

Limited by a size of a screen, a quantity of atomic service controls 231 simultaneously displayed in the atomic service area 230 is limited. Refer to FIG. 7H and FIG. 7I, it can be learned from FIG. 7I that, six atomic service controls 231 are provided in the atomic service area 230. However, in the example shown in FIG. 7H, only three of the atomic service controls 231 are displayed in the atomic service area 230. In the example shown in FIG. 7H, the user may control, by using a slide operation, the electronic device to scroll the sharing interface, to display a sharing interface shown in FIG. 7I.

In this application, in a process in which the electronic device scrolls the sharing interface, as shown in FIG. 7I, the sharing title area 210 is always completely displayed on the sharing interface, and only the path selection area 220 and the atomic service area 230 are scrolled in a longitudinal direction. Therefore, the user can conveniently learn related information about the first material from the sharing title area.

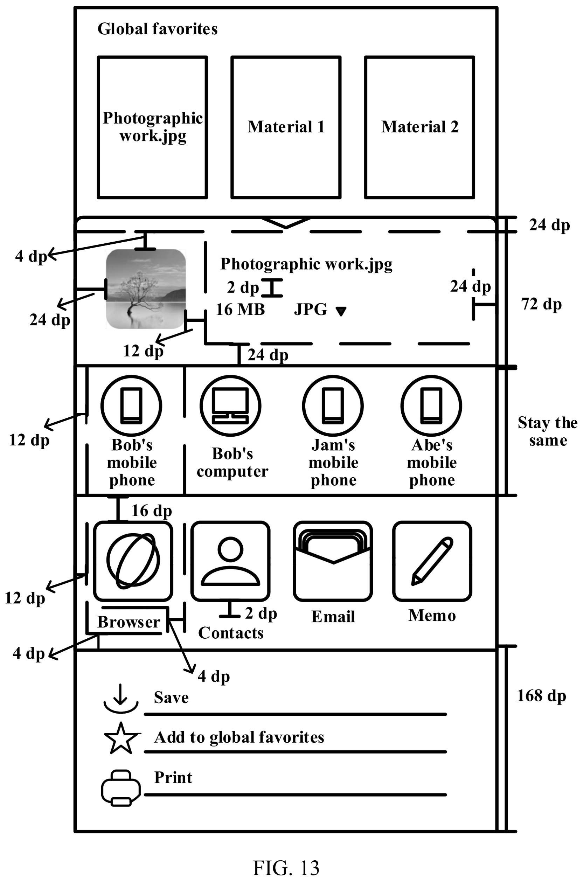

To describe the sharing interface provided in this application more clearly, FIG. 13 is a schematic diagram of a size of a sharing interface provided in this application.

A height of a title bar of the sharing interface is 24 dp, and a height of a title sharing area 210 is 72 dp. In this example, a title sub-area 212 is right aligned with a format sub-area 213, the title sub-area 212 is left aligned with an attribute sub-area 214, and the format sub-area 213 is bottom aligned with the attribute sub-area 214. A distance between a thumbnail sub-area 215 and a left boundary of the title sharing area 210 is 24 dp, a distance between the format sub-area 213 and a right boundary of the title sharing area 210 is 24 dp, a distance between the thumbnail sub-area 215 and the title sub-area 212 is 12 dp, a distance between the thumbnail sub-area 215 and an upper boundary of the title sharing area 210 is 4 dp, a distance between the title sub-area 212 and the attribute sub-area 214 is 2 dp, and a distance between the format sub-area 213 and a lower boundary of the title sharing area 210 is 24 dp.

A height of an atomic service area 230 is 168 dp, a distance between the leftmost device icon 221 and a left boundary of the path selection area 220 is 12 dp, and a distance between the leftmost application icon 222 and the left boundary of the path selection area 220 is 12 dp. Device icons 221 are aligned in a horizontal direction, application icons 222 are aligned in the horizontal direction, and a distance between the device icon 221 and the application icon 222 in a vertical direction is 16 dp. A distance between each of the device icon 221 and the application icon 222 and a name of the icon is 2 dp, and space of two line heights is reserved for the name of each of the device icon 221 and the application icon 222.

This application further provides an electronic device, including:
one or more processors and a memory.

The memory is coupled to the one or more processors, the memory is configured to store computer program code, the computer program code includes computer instructions. The one or more processors invoke the computer instructions to enable the electronic device to perform the file sharing method. For a structure of the electronic device, refer to FIG. 1. Details are not described herein again.

This application further provides a computer-readable storage medium, including a computer program. When the computer program is run on the electronic device, the electronic device is enabled to perform the file sharing method.

This application further provides a computer program product. When the computer program product is run on a computer, the computer is enabled to perform the steps of the file sharing method in the foregoing embodiments.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk drive, or a magnetic tape), an optical medium (for example, a DVD), a solid state disk (Solid State Disk (SSD)), or the like.

This application further provides a graphical user interface (GUI). The GUI includes the first interface, the second interface, the first sharing interface, the second sharing interface, the third sharing interface, the fourth sharing interface, the converting interface, the application selection interface, and the icon editing interface described above. For how a user interacts with these interfaces, and a case in which the electronic device displays these interfaces, refer to the foregoing related descriptions of the interfaces. Details are not described herein again.

The foregoing descriptions are merely preferred embodiments of the present invention and are not intended to limit the present invention. Any modification, equivalent replacement, and improvement made without departing from the spirit and principle of the present invention shall fall within the protection scope of the present invention.

## Claims

1. A file sharing method, wherein the method comprises:
displaying a first interface when an electronic device runs a first application, wherein a first material in a first format is displayed on the first interface;
displaying a first sharing interface in response to a sharing instruction for the first material, wherein the first sharing interface comprises a sharing title area and a path selection area, the sharing title area of the first sharing interface comprises a format conversion control and a format sub-area, the first format is displayed in the format sub-area of the first sharing interface, and a sharing manner of the first material in the first format is displayed in the path selection area of the first sharing interface;
displaying a second sharing interface in response to an interaction instruction for the format conversion control on the first sharing interface, wherein a second format is displayed on the second sharing interface, and the second format is different from the first format;
converting a format of the first material from the first format into the second format in response to a format selection instruction for the second format, and displaying a third sharing interface, wherein the third sharing interface comprises a sharing title area and a path selection area, the sharing title area of the third sharing interface comprises a format conversion control and a format sub-area, the second format is displayed in the format sub-area of the third sharing interface, and a sharing manner of the first material in the second format is displayed in the path selection area of the third sharing interface; and
sharing, in response to a sharing manner in the path selection area of the third sharing interface, the first material in the second format in the sharing manner.

2. The method according to claim 1, wherein the method further comprises:
displaying a converting interface when performing the step of converting the format of the first material from the first format into the second format, wherein the converting interface comprises a conversion cancel control; and
terminating, in response to an interaction instruction for the conversion cancel control, performing the step of converting the format of the first material from the first format into the second format, and displaying the first sharing interface.

3. The method according to claim 1, wherein the sharing title area of the first sharing interface and/or the sharing title area of the third sharing interface further comprise/comprises a title sub-area, and a material name of the first material or a quantity of first materials is displayed in the title sub-area.

4. The method according to claim 3, wherein when there is one first material, the material name of the first material is displayed in the title sub-area; or
when there is one first material, the quantity of first materials is displayed in the title sub-area.

5. The method according to claim 3, wherein when there is one first material, the first format is displayed in the format sub-area of the first sharing interface; or
when there are a plurality of first materials, text information representing a default format is displayed in the format sub-area of the first sharing interface.

6. The method according to claim 3, wherein the sharing title area of the first sharing interface and/or the sharing title area of the third sharing interface further comprise/comprises an attribute sub-area, wherein a target attribute of the first material is displayed in the attribute sub-area, and the target attribute is an attribute that is in a preset application-attribute correspondence and that corresponds to the first application.

7. The method according to claim 6, wherein the service-attribute correspondence comprises one or more of the following correspondences:
a file manager corresponds to a file size, and a browser corresponds to a website.

8. The method according to claim 3, wherein the sharing title area of the first sharing interface and/or the sharing title area of the third sharing interface further comprise/comprises a thumbnail sub-area; and
when there is one first material, a thumbnail of the first material is displayed in the thumbnail sub-area; or
when there are a plurality of first materials, a stacked thumbnail is displayed in the thumbnail sub-area, wherein the stacked thumbnail is obtained by stacking thumbnails of the first materials.

9. The method according to claim 8, wherein the stacked thumbnail is obtained through stacking in the following manner, comprising:
when there are not more than N first materials, stacking thumbnails of all the first materials, to obtain the stacked thumbnail; or
when there are more than N first materials, stacking thumbnails of first N first materials in a sequence in which the first materials are selected based on the sharing instruction, to obtain the stacked thumbnail.

10. The method according to claim 1, wherein the first sharing interface and the third sharing interface each further comprise an atomic service area, the atomic service area comprises an atomic service control, and each atomic service control corresponds to one atomic service; and
the method further comprises:
performing, in response to an interaction instruction for the atomic service control, an atomic service corresponding to the atomic service control on the first material.

11. The method according to claim 10, wherein the atomic service area comprises an atomic service control corresponding to the format of the first material and the first application.

12. The method according to claim 11, wherein
if the first material selected based on the sharing instruction is text, a single picture, or a single document, and the first application is global favorites, the atomic service area comprises atomic service controls corresponding to the following atomic services: a print service, a save to text notes service, a save to Evemote service, a save to file manager service, and an add to global favorites service;
if the first material selected based on the sharing instruction is a plurality of pictures or a plurality of documents, and the first application is global favorites, the atomic service area comprises atomic service controls corresponding to the following atomic services: a save to text notes service, a save to Evemote service, a save to file manager service, and an add to global favorites service;
if the first material selected based on the sharing instruction is a video, and the first application is global favorites, the atomic service area comprises atomic service controls corresponding to the following atomic services: atomic service controls corresponding to a save to Evemote service, a save to file manager service, and an add to global favorites service;
if the first material selected based on the sharing instruction is an application, and the first application is global favorites, the atomic service area comprises atomic service controls corresponding to the following atomic services: a save to file manager service, and an add to global favorites service;
if the first material selected based on the sharing instruction is a link, and the first application is global favorites, the atomic service area comprises atomic service controls corresponding to the following atomic services: a save to text notes service, a save to Evernote service, and an add to global favorites service; or
if the first material selected based on the sharing instruction is a compressed package, and the first application is global favorites, the atomic service area comprises an atomic service control corresponding to the following atomic service: an add to global favorites service.

13. The method according to claim 1, wherein when there are a plurality of first materials, an intersection of second formats preset for each first format is displayed on the second sharing interface.

14. The method according to claim 1, wherein if the first material selected based on the sharing instruction is text, and the first application is global favorites, the second comprises a word format, a pdf format, and a txt format;
if the first material is a single picture, and the first application is global favorites, the second format comprises a pdf format and a JPG format;
if the first material is a plurality of pictures, and the first application is global favorites, the second format comprises a pdf format, a JPG format, and a long-image format;
if the first material selected based on the sharing instruction is a single word document, and the first application is global favorites, the second format comprises a pdf format and a long-image format;
if the first material is single ppt, and the first application is global favorites, the second format comprises a pdf format and a long-image format;
if the first material is text or a single note, and the first application is a notes service, the second format comprises a picture format, a text format, a DOC format, a PDF format, and an HTML format.
if the first material is a schedule, and the first application is a schedule application, the second format comprises a picture format, a text format, and a calendar format; or
if the first material is a contact, and the first application is Phone, the second format comprises a two-dimensional code format, a VCard format, and a text format.

15. The method according to claim 1, wherein the first sharing interface, the second sharing interface, and the third sharing interface are displayed over the first interface in a floating manner.

16. The method according to claim 1, wherein the method further comprises:
displaying a second interface when the electronic device runs a second application, wherein a second material in a third format is displayed on the second interface, and the second application comprises a gallery and is different from the first application;
displaying a fourth sharing interface in response to a sharing instruction for the second material, wherein the fourth sharing interface comprises a path selection area and an atomic service area;
performing, in response to an interaction instruction for an atomic service control on the fourth sharing interface, an atomic service corresponding to the atomic service control on the second material; and
sharing, in response to a sharing manner displayed in the path selection area of the fourth sharing interface, the second material in the sharing manner.

17. An electronic device, comprising:
one or more processors and a memory, wherein
the memory is coupled to the one or more processors, the memory is configured to store computer program code, the computer program code comprises computer instructions, and the one or more processors invoke the computer instructions to enable the electronic device to perform the file sharing method according to any one of claims 1 to 16.

18. A computer-readable storage medium, comprising a computer program, wherein when the computer program is run on an electronic device, the electronic device is enabled to perform the file sharing method according to any one of claims 1 to 16.
